# EUROPEAN PATENT SPECIFICATION

(11) **EP 4 005 181 B1**
(45) Date of publication and mention of the grant of the patent: **22.11.2023**
(21) Application number: 20757088.8
(22) Date of filing: 29.07.2020
(51) Int. Cl.: H04W 4/70, H04L 65/1069

(54) **RDS SUPPORT FOR LWM2M AND NON-LWM2M IOT APPLICATIONS**
RDS-TRÄGER FÜR LWM2M- UND NICHT-LWM2M-IOT-ANWENDUNGEN
SUPPORT RDS POUR APPLICATIONS IDO LWM2M ET NON LWM2M

(30) Priority: 30.07.2019 US 201962880600 P; 28.07.2020 US 202016941207
(43) Date of publication of application: 01.06.2022
(73) Proprietor: QUALCOMM INCORPORATED, San Diego, California 92121-1714 (US)
(72) Inventor: ABBASI, Hamza Ijaz, San Diego, California 92121-1714 (US); GHOLMIEH, Ralph Akram, San Diego, California 92121-1714 (US); MAZLOOMIAN, Elmira, San Diego, California 92121-1714 (US); SOLOWAY, Alan, San Diego, California 92121-1714 (US)
(74) Representative: Howe, Steven
(86) International application number: PCT/US2020/043928
(87) International publication number: WO 2021/021841

(56) References cited:
- WO-A1-2018/144249
- QUALCOMM INCORPORATED ET AL: "Adding port discovery to RDS", 3GPP DRAFT; C1-190291_RDS_DISCOVERY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Bratislava, Slovakia; 20190121 - 20190125 14 January 2019 (2019-01-14), XP051572983, Retrieved from the Internet: URL:http://www.3gpp.org/ftp/tsg%5Fct/WG1%5 Fmm%2Dcc%2Dsm%5Fex%2DCN1/TSGC1%5F114%5FBra tislava/docs/C1%2D190291%2Ezip [retrieved on 2019-01-14]
- TELSTRA: "Lawful Interception for Non-IP Data Delivery (NIDD) using SCEF", 3GPP DRAFT; LI FOR NIDD USING SCEF, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 19 February 2019 (2019-02-19), XP051611692, Retrieved from the Internet: URL:http://www.3gpp.org/ftp/tsg%5Fsa/WG3%5 FSecurity/TSGS3%5FLI/2019%5F72bis%5FDussel dorf/Docs/S3i190126%2Ezip [retrieved on 2019-02-19]
- Anonymous: "Lightweight Machine to Machine Technical Specification: Core", , 12 June 2018 (2018-06-12), XP055606409, Retrieved from the Internet: URL:http://www.openmobilealliance.org/rele ase/LightweightM2M/V1_1-20180612-C/OMA-TS- LightweightM2M_Core-V1_1-20180612-C.html [retrieved on 2019-07-17]

## Description

### BACKGROUND

In the Lightweight Machine-to-Machine (LwM2M) protocol, such as the LwM2M protocol defined according to the Open Mobile Alliance (OMA) LwM2M version 1.1 specification, non-Internet Protocol (non-IP) data delivery (NIDD) is supported. NIDD allows a device, such as a LwM2M device, to connect to a single destination (e.g., a single LwM2M server, etc.) per a non-IP data call. The Reliable Delivery Service (RDS) supports multiplexing of multiple simultaneous connections over a single NIDD data call. In RDS, a connection may be defined by a pair of source port numbers and destination port numbers and a data channel identifier, such as an Evolved Packet System (EPS) bearer ID. While RDS may support multiplexing of multiple simultaneous connections over a single NIDD data call, current Internet of Things (IoT) devices (e.g., current LwM2M client devices, current non-LwM2M client devices, etc.) do not support configuring RDS ports. Accordingly, current IoT devices (e.g., current LwM2M client devices, current non-LwM2M client devices, etc.) are currently limited to connecting to a single destination (e.g., a single LwM2M server, etc.) per non-IP data call.
QUALCOMM INCORPORATED ET AL: "Adding port discovery to RDS", 3GPP Draft; C1-190291_RDS_DISCOVERY, 3rd Generation Partnership Project (3GPP), Mobile Competence Centre; 650, Route Des Lucioles; F-06921 Sophia-Antipolis Cedex; France, vol. CT WG1, no. Bratislava, Slovakia; 20190121 - 20190125 describes the addition of a command to the RDS protocol to be used by an originator to request a receiver to return a response with a list of destination port numbers and associated application identifiers.
TELSTRA: "Lawful Interception for Non-IP Data Delivery (NIDD) using SCEF", 3GPP Draft; LI For NIDD Using SCEF, 3rd Generation Partnership Project (3GPP), Mobile Competence Centre; 650, Route Des Lucioles; F-06921 Sophia-Antipolis Cedex; France, XP051611682 describes the performance of lawful interception towards a target that is communicating using NIDD via Service Capability Exposure Function (SCEF).
WO 2018/144249 A1 describes an apparatus of a Cellular-Internet-Of Things (CIoT) capable user equipment including processing circuitry configured to encode an Attach Request message for transmission to a Mobility Management Entity (MME) in an Evolved Packet System (EPS).
Anonymous: "Lightweight Machine to Machine Technical Specification: Core", XP055606409 describes the core specification of the Lightweight Machine to Machine messaging layer.

### SUMMARY

The scope of the present invention is defined by the scope of the appended claims. All embodiments which do not fall under the scope of the appended claims are examples which are useful to understand the invention, but do not form part of the present invention.

### BRIEF DESCRIPTION OF THE DRAWINGS

The accompanying drawings, which are incorporated herein and constitute part of this specification, illustrate exemplary embodiments of the claims, and together with the general description given above and the detailed description given below, serve to explain the features of the claims.
FIG. 1 is a system block diagram conceptually illustrating an example telecommunications system.
FIG. 2 is a component block diagram illustrating components of example IoT devices suitable for implementing various embodiments of the present disclosure.
FIG. 3 is a block diagram illustrating an example NIDD data call architecture suitable for use with various embodiments.
FIG. 4 is a process flow diagram illustrating a method for supporting multiple simultaneous connections over a single NIDD data call by an IoT device.
FIG. 5 is a process flow diagram illustrating a method for supporting multiple simultaneous connections over a single NIDD data call by an IoT device.
FIG. 6 is a block diagram illustrating operations according to various embodiments to support multiple simultaneous connections over a single NIDD data call by an IoT device.
FIG. 7 is a block diagram illustrating example relationships between server objects and connectivity objects according to various embodiments.
FIG. 8 is a process flow diagram illustrating a method for supporting multiple simultaneous connections over a single NIDD data call by an IoT device.
FIG. 9 is a process flow diagram illustrating a method for supporting multiple simultaneous connections over a single NIDD data call by an IoT device.
FIG. 10 is a process flow diagram illustrating a method for supporting multiple simultaneous connections over a single NIDD data call by an IoT device.
FIG. 11 is a process flow diagram illustrating a method for supporting multiple simultaneous connections over a single NIDD data call by an IoT device.
FIG. 12 is a process flow diagram illustrating a method for supporting multiple simultaneous connections over a single NIDD data call by an IoT device.
FIG. 13 is a process flow diagram illustrating a method for supporting multiple simultaneous connections over a single NIDD data call by an IoT device.
FIG. 14 is a block diagram illustrating operations according to various embodiments to support multiple simultaneous connections over a single NIDD data call by an IoT device.
FIG. 15 is a block diagram illustrating example relationships between server objects and connectivity objects according to various embodiments.
FIG. 16 is a process flow diagram illustrating a method for supporting multiple simultaneous connections over a single NIDD data call by an IoT device.
FIG. 17 is a process flow diagram illustrating a method for supporting multiple simultaneous connections over a single NIDD data call by an IoT device.
FIG. 18 is a block diagram illustrating operations according to various embodiments to support multiple simultaneous connections over a single NIDD data call by an IoT device.
FIG. 19 is a process flow diagram illustrating a method for supporting multiple simultaneous connections over a single NIDD data call by an IoT device.
FIG. 20 is a process flow diagram illustrating a method for supporting multiple simultaneous connections over a single NIDD data call by an IoT device.
FIG. 21 is a block diagram illustrating operations according to various embodiments to support multiple simultaneous connections over a single NIDD data call by an IoT device.
FIG. 22 is a process flow diagram illustrating a method for supporting multiple simultaneous connections over a single NIDD data call by an IoT device.
FIG. 23 is a component block diagram of an IoT device suitable for use in accordance with various embodiments of the present disclosure.
FIG. 24 is a component diagram of an example server suitable for use with the various embodiments.

### DETAILED DESCRIPTION

Various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the claims.

Various embodiments enable the configuration of Reliable Delivery Service (RDS) destination ports to provide for multiplexing of multiple simultaneous connections over a single non-Internet Protocol (non-IP) data delivery (NIDD) data call by an Internet of Things (IoT) device. Various embodiments enable the configurations of RDS ports (e.g., RDS source ports, RDS destination ports, etc.) through Open Mobile Alliance (OMA) objects, such as Lightweight Machine-to-Machine (LwM2M) objects. Various embodiments may enable an IoT device (e.g., a LwM2M client device, a non-LwM2M client device, etc.) to connecting to more than one destination (e.g., multiple LwM2M servers, etc.) per non-IP data call.

The term "IoT device" is used herein to refer to any of a variety of devices including a processor and transceiver for communicating with other devices or a network. For ease of description, examples of IoT devices are described as communicating via radio frequency (RF) wireless communication links, but IoT devices may communicate via wired or wireless communication links with another device (or user), for example, as a participant in a communication network, such as the IoT. Such communications may include communications with another wireless device, a base station (including a cellular communication network base station and an IoT base station), an access point (including an IoT access point), or other wireless devices.

Various embodiments may be implemented in any device, system or network that is capable of transmitting and receiving RF signals according to any of the Institute of Electrical and Electronics Engineers (IEEE ) 16.11 standards, or any of the IEEE 802.11 standards, the Bluetooth^{®} standard, code division multiple access (CDMA), frequency division multiple access (FDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (W-CDMA), Evolution Data Optimized (EV-DO), 1xEV-DO, EV-DO Rev A, EV-DO Rev B, High Speed Packet Access (HSPA), High Speed Downlink Packet Access (HSDPA), High Speed Uplink Packet Access (HSUPA), Evolved High Speed Packet Access (HSPA+), Long Term Evolution (LTE), AMPS, or other known signals that are used to communicate within a wireless, cellular or internet of things (IoT) network, such as an IEEE 802.15.4 protocol (for example, Thread, ZigBee, and Z-Wave), 6LoWPAN, Bluetooth Low Energy (BLE), LTE Machine-Type Communication (LTE MTC), Narrow Band LTE (NB-LTE), Cellular IoT (CIoT), Narrow Band IoT (NB-IoT), BT Smart, Wi-Fi, LTE-U, LTE-Direct, MuLTEfire, as well as relatively extended-range wide area physical layer interfaces (PHYs) such as Random Phase Multiple Access (RPMA), Ultra Narrow Band (UNB), Low Power Long Range (LoRa), Low Power Long Range Wide Area Network (LoRaWAN), Weightless, or a system utilizing 3G, 4G or 5G, or further implementations thereof, technology.

The term "system on chip" (SOC) is used herein to refer to a single integrated circuit (IC) chip that contains multiple resources and/or processors integrated on a single substrate. A single SOC may contain circuitry for digital, analog, mixed-signal, and radio-frequency functions. A single SOC may also include any number of general purpose and/or specialized processors (digital signal processors, modem processors, video processors, etc.), memory blocks (e.g., ROM, RAM, Flash, etc.), and resources (e.g., timers, voltage regulators, oscillators, etc.). SOCs may also include software for controlling the integrated resources and processors, as well as for controlling peripheral devices.

The term "system in a package" (SIP) is used herein to refer to a single module or package that contains multiple resources, computational units, cores and/or processors on two or more IC chips, substrates, or SOCs. For example, a SIP may include a single substrate on which multiple IC chips or semiconductor dies are stacked in a vertical configuration. Similarly, the SIP may include one or more multichip modules (MCMs) on which multiple ICs or semiconductor dies are packaged into a unifying substrate. A SIP may also include multiple independent SOCs coupled together via high speed communication circuitry and packaged in close proximity, such as on a single motherboard or in a single IoT device. The proximity of the SOCs facilitates high speed communications and the sharing of memory and resources.

The term "multicore processor" is used herein to refer to a single integrated circuit (IC) chip or chip package that contains two or more independent processing cores (e.g., central processing unit (CPU) core, internet protocol (IP) core, graphics processor unit (GPU) core, etc.) configured to read and execute program instructions. A SOC may include multiple multicore processors, and each processor in an SOC may be referred to as a core. The term "multiprocessor" is used herein to refer to a system or device that includes two or more processing units configured to read and execute program instructions.

The various embodiments are described herein using the term "server" to refer to any computing device capable of functioning as a server, such as a master exchange server, web server, mail server, document server, content server, or any other type of server. A server may be a dedicated computing device or a computing device including a server module (e.g., running an application that may cause the computing device to operate as a server). A server module (e.g., server application) may be a full function server module, or a light or secondary server module (e.g., light or secondary server application) that is configured to provide synchronization services among the dynamic databases on receiver devices. A light server or secondary server may be a slimmed-down version of server-type functionality that can be implemented on a receiver device thereby enabling it to function as an Internet server (e.g., an enterprise e-mail server) only to the extent necessary to provide the functionality described herein.

Various embodiments enable the configuration of RDS destination ports to provide for multiplexing of multiple simultaneous connections over a single NIDD data call. Various embodiments enable the configurations of RDS ports (e.g., RDS source ports, RDS destination ports, etc.) through OMA objects, such as LwM2M objects. Various embodiments enable different RDS destination ports per Access Point Name (APN) for each server to be specified. Various embodiments may enable multiplexing of multiple simultaneous connections over a single NIDD data call to multiple RDS ports, such as two or more RDS destination ports, 16 RDS destination ports, etc.

In some embodiments, an APN connection profile (Object Identifier (Object ID) 11) may provide a mapping between each server and RDS destination port. Various embodiments may include generating an APN connection profile object (Object ID 11) including a server uniform resource identifier (URI) list and a Reliable Delivery Service (RDS) port list, wherein the server URI list indicates servers reachable using an APN of the APN connection profile object and the RDS port list indicates RDS destination ports to communicate with the servers indicated in the server URI list. In some embodiments, there may be a 1-1 mapping between each server on a non-IP APN and an RDS destination port. In some embodiments, servers may be identified by the Server URI. In some embodiments, the APN connection profile (Object ID 11) may include multi-instance resources providing a mapping between a list of servers and the corresponding RDS destination ports within each APN connection profile instance. The server URI List resource may be a list of servers that can be reached using this APN. The RDS Destination Ports resource may be a list of RDS destination ports based on which the SCEF routes the data to appropriate servers. Each RDS destination port resource instance may map to the corresponding/matching Server URI list resource instance (e.g. RDS destination port instance 0 maps to Server URI list instance 0, etc.). some embodiments may include sending the APN connection profile object to an IoT device.

In some embodiments, the IoT device may receive the APN connection profile object including the server URI list and an RDS port list and use the APN connection profile object to send uplink traffic via multiple simultaneous connections over a single NIDD data call. Some embodiments may include determining an RDS destination port for uplink traffic to a destination server based on the destination server's APN and URI using the APN connection profile object. For example, based on the Server URI and APN, the processor may determine the RDS destination port. Some embodiments may include sending uplink traffic including the RDS destination port in a NIDD data call to a SCEF for routing to the destination server. Based on the APN and this RDS destination port, the SCEF will then forward the data to the corresponding server. In some embodiments, optionally an App ID may also be used to either identify the non-LwM2M applications or the LwM2M servers.

Various embodiments providing an APN connection profile object including the server URI list and an RDS port list may be beneficial in that such an APN connection profile object may be applicable universally for both LwM2M applications, as well as non-LwM2M applications due to Object 11 not being LwM2M specific. As such, an APN connection profile object including the server URI list and an RDS port list may support connection to both LwM2M servers and non-LwM2M servers (e.g., any server with a valid URI). Various embodiments providing an APN connection profile object including the server URI list and an RDS port list may be beneficial in that such an APN connection profile object may be used to configure ports for connecting to Bootstrap servers (e.g., by using a Bootstrap server URI).

In some embodiments, an APN connection profile (Object ID 11) may provide a mapping between each server and Application Identifier (App ID). Some embodiments may include generating an Access Point Name (APN) connection profile object including a server uniform resource identifier (URI) list and an Application Identifier (App ID) list, wherein the server URI list indicates servers reachable using an APN of the APN connection profile object and the App ID list indicates either App IDs for the servers indicated in the server URI list or the application resolved App IDs. In some embodiments, there may be a 1-1 mapping between each server on a non-IP APN and an Application Identifier (App ID). Servers may be identified by the Server URI. Based on the App ID, an RDS Port Discovery mechanism may be used to discover an appropriate RDS destination port to forward data to the server. In some embodiments, the APN connection profile (Object 11) may include multi-instance resources to provide a mapping between each server and the corresponding App ID within each APN connection profile instance, such as a server URI List resource that may be a list of servers that can be reached using this APN and an App ID resource that may be a list of App IDs (to determine RDS destination port) based on which the SCEF routes the data to appropriate servers. Various embodiments may include sending the APN connection profile object to an IoT device.

Some embodiments may include receiving an Access Point Name (APN) connection profile object including a server uniform resource identifier (URI) list and an Application Identifier (App ID) list, in which the server URI list indicates servers reachable using an APN of the APN connection profile object and the App ID list indicates either App IDs for the servers indicated in the server URI list or the application resolved App IDs. In some embodiments, each App ID resource instance maps to the corresponding/matching Server URI List resource instance (e.g. App ID instance 0 maps to Server URI List instance 0, and so on). Some embodiments may include determining an App ID for a destination server based on the destination server's APN and URI using the APN connection profile object. For example for uplink traffic, the client device (e.g., IoT device, etc.) determines the App ID based on the Server URI. Some embodiments may include determining an RDS destination port for uplink traffic to the destination server based on the App ID for the destination server. For example, based on the App ID, an RDS Port Discovery mechanism may be used to discover an appropriate RDS destination port to forward data to the server. Some embodiments may include sending uplink traffic including the RDS destination port in a NIDD data call to a Service Capability Exposure Function (SCEF) for routing to the destination server. For example, based on the APN and the App ID, an RDS port discovery mechanism is used to allow the SCEF to forward the data to the corresponding server.

In some embodiments, an APN connection profile (Object ID 11) may provide a mapping between each server, RDS destination ports, and App IDs. Some embodiments may include generating an Access Point Name (APN) connection profile object including a server uniform resource identifier (URI) list, a Reliable Delivery Service (RDS) port list, and an Application Identifier (App ID) list, wherein the server URI list indicates servers reachable using an APN of the APN connection profile object, the RDS port list indicates RDS destination ports to communicate with the servers indicated in the server URI list, and the App ID list indicates either App IDs for the servers indicated in the server URI list or the application resolved App IDs. The combination of RDS destination ports and App IDs listed in the APN connection profile (Object ID 11) may enable a fall back to using RDS destination ports if an App ID is not defined for a server and/or may enable fall back to using an App ID is an RDS destination port in not defined for a server. Additionally, the APN connection profile (Object ID 11) may include a mix of some server identified by only RDS destination port, some servers identified by only App ID, and some servers identified by both. For example, only App ID may be provided for non-LwM2M servers with a port discovery mechanism and App ID and RDS destinations ports may be provided for non-LwM2M servers without a port discovery mechanism.

In some embodiments, an APN connection profile (Object ID 11) may further include a flag indication reflecting whether or not an APN supports RDS.

In some embodiments, a server object (Object ID 1) may provide a list of RDS port numbers. The port entry instance may match the instance number of the APN link resource or the Alternate APN link resource for the server. Some embodiments may include generating a Lightweight Machine-to-Machine (LwM2M) server object including a Reliable Delivery Service (RDS) port list, wherein the RDS port list indicates RDS destination ports for Access Point Names (APNs) of servers indicated in the server object. In some embodiments, there may be a 1-1 mapping between each non-IP APN (that is referenced in the Server object) and an RDS destination port. APNs may be referenced in the Server object using the APN link resource as well as Alternate APN links resource. The RDS destination port resource instance may match the instance number of the APN link resource or the Alternate APN links resource. For simplicity, Alternate APN link resource instances may be defined starting from 1. In some embodiments, the server object (Object 1) may include multi-instance resource providing a mapping between the APNs and corresponding RDS destination ports, such as an RDS Destination Ports resource that is a list of RDS destination ports based on which the SCEF routes the data to appropriate servers. Some embodiments may include sending the server object to an IoT device. In some embodiments, the server object may be sent to the IoT device from a bootstrap server. In some aspects, sending the server object to the IoT device may include pre-provisioning the server object in a memory available to the IoT device (e.g., as a factory setting stored in an installed memory of the IoT device, on a Smart Card inserted into the IoT device, etc.).

Some embodiments may include receiving a Lightweight Machine-to-Machine (LwM2M) server object including a Reliable Delivery Service (RDS) port list, wherein the RDS port list indicates RDS destination ports for Access Point Names (APNs) of servers indicated in the server object. Some embodiments may include determining an RDS destination port for uplink traffic to a destination server based on the destination server's APN using the server object. In various embodiments, determining the RDS destination port for uplink traffic to the destination server based on the destination server's APN using the server object may include determining the RDS destination port for uplink traffic to the destination server based on the destination server's APN link or alternate APN link using the server object. For uplink traffic, based on the RDS destination port corresponding to the selected non-IP APN in the Server object, the client may indicate the destination port in uplink traffic and the SCEF forwards the data to corresponding server. Some embodiments may include sending the uplink traffic including the RDS destination port in a NIDD data call to SCEF for routing to the destination server.

In some embodiments, a security object (Object ID 0) may provide a list of multiple RDS port number that may map to non-IP APNs. The port entry instance may match the instance number of the APN link resource or the Alternate APN link resource for the server. Some embodiments may include generating a Lightweight Machine-to-Machine (LwM2M) security object including a Reliable Delivery Service (RDS) port list, in which the RDS port list indicates RDS destination ports for Access Point Names (APNs) of a server indicated in the security object. In some embodiments, there may be a 1-1 mapping between each non-IP APN (APN connection profile instance) and an RDS destination port. A security object may only correspond to a single server. The mapping may be between RDS ports and the APN connection profile instance. In some embodiments, the RDS destination port resource instance maps to the corresponding APN connection profile instance (e.g. RDS destination port instance 0 maps to APN connection profile instance 0, etc.). In some embodiments, a multi-instance resource in the Security Object (Object 0) may provide RDS destination ports corresponding to each non-IP APN connection profile (Object 11) instance, such as an RDS Destination Ports resource that may be a list of RDS destination ports based on which the SCEF routes the data to appropriate servers. Some embodiments may include sending the security object to an IoT device.

Some embodiments may include receiving a Lightweight Machine-to-Machine (LwM2M) security object including a Reliable Delivery Service (RDS) port list, wherein the RDS port list indicates RDS destination ports for Access Point Names (APNs) of a server indicated in the security object. Some embodiments may include determining an RDS destination port for uplink traffic to a destination server based on the destination server's APN using the security object. In some embodiments, for uplink traffic, based on the APN and the RDS destination port (in the Security Object), the client may select the RDS destination port for uplink traffic such that the SCEF forwards the data to the corresponding server. Some embodiments may include sending the uplink traffic including the RDS destination port in a NIDD data call to a Service Capability Exposure Function (SCEF) for routing to the destination server.

Some embodiments may include generating a Lightweight Machine-to-Machine (LwM2M) security object (Object 0) including an Application Identifier (App ID) configured to be used by an LwM2M device to query the SCEF to retrieve RDS port information, such as RDS source port values, RDS destination port values, etc. In some embodiments, RDS port information, such as RDS source port values, RDS destination port values, etc., may not be configured in a LwM2M security object (Object 0). In some embodiments, in response to determining that the RDS destination port values and/or RDS source port values are not configured in a LwM2M security object (Object 0), the App ID in the LwM2M security object may be used by an LwM2M device to query the SCEF to retrieve the appropriate RDS source port and/or RDS destination port values. In some embodiments, the App ID may be an LwM2M server identifier. The SCEF may return the RDS source port values and/or RDS destination port values for the LwM2M server associated with the App ID indicated in a query.

In some embodiments, an APN connection profile (Object ID 11) may provide a mapping between an App ID and RDS port information, such as RDS source port values, RDS destination port values, etc. For example, an APN connection profile (Object ID 11) may include an RDS source port list and RDS destination port list in which RDS ports are correlated with the App IDs of the LwM2M servers associated with the respective ports.

In some embodiments, a port query mechanism may not be supported by a LwM2M device. In some embodiments, in response to determining that the RDS destination port values and/or RDS source port values are not configured in a LwM2M security object (Object 0) and/or in response to determining that a port query mechanism is not supported, an LwM2M device may use the App ID indicated in the LwM2M security object (Object 0) as a reference into the RDS source port and RDS destination port list to discover the RDS source port and RDS destination port for the LwM2M server associated with the App ID.

In some embodiments, an Application Identifier (App ID) may be an RDS Application ID that is a resource in a Lightweight Machine-to-Machine (LwM2M) security object (Object 0). The App ID may be used by an LwM2M device to query the SCEF for source and destination port number for use in contacting a LwM2M server or bootstrap server when communicating through the SCEF in a NIDD data call. In some embodiments, an APN connection profile (Object ID 11) may include a list of RDS application IDs. The list of RDS application IDs may be a resource that provides the App ID to correlate to the appropriate instance IDs of RDS destination port resources in the APN connection profile object (e.g., Resource 30) and RDS source port resources in the APN connection profile object (e.g., Resource 31 in Object ID 11). In some embodiments, the list of RDS source ports in the APN connection profile object may be a resource that provides the correlated RDS source port number to use for contacting the LwM2M Server identified in the RDS Application ID list (e.g., Resource 29 in Object ID 11) when communicating through the SCEF in a NIDD data call. In some embodiments, the list of RDS destination ports in the APN connection profile object may be a resource that provides the correlated RDS destination port number to use for contacting the LwM2M Server identified in the RDS Application ID list (e.g., Resource 29 in Object ID 11) when communicating through the SCEF in a NIDD data call.

In some embodiments, IoT devices may be configured to prioritize the use of RDS source port and RDS destination port indications in security objects over query mechanisms or indications in APN connection profile objects. In some embodiments, an IoT device may use the RDS source port and RDS destination port when specified in a security object. The RDS source port and RDS destination port may be specified in a security object when the RDS source ports and RDS destination ports are the same on all APNs. In some embodiments, in response to determining that the RDS source port and RDS destination port are not indicated in a security object, an IoT device may use an App ID configured in the security object to query the SCEF and thereby retrieve the appropriate RDS source port and RDS destination port. In some embodiments, in response to determining that a query mechanism (e.g., a query of an SCEF, etc.) is not supported, an IoT device may use the App ID configured in the security object to determine the RDS source port and RDS destination port when the RDS source port and RDS destination port are configured in an APN connection profile object. In some embodiments, to select the correct RDS source port and RDS destination port from the port lists in the APN connection profile object, the IoT device may use the instance of the APP ID in the security object as a reference into the RDS source port and RDS destination port lists in the APN connection profile object. The use of the APP ID to reference the RDS source port and RDS destination port in the APN connection profile object may support implementations in which the RDS source ports and RDS destination ports are different on different APNs.

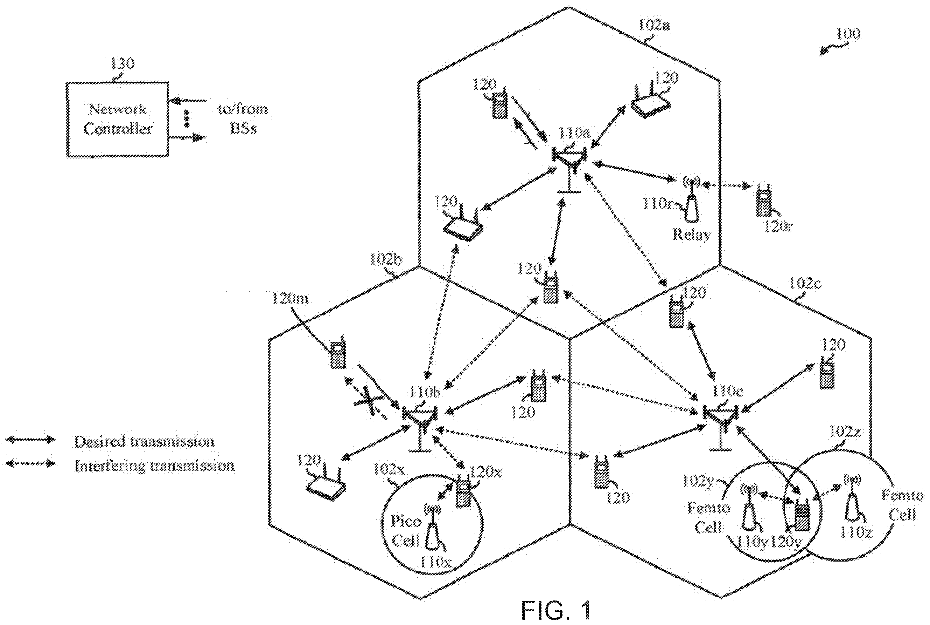

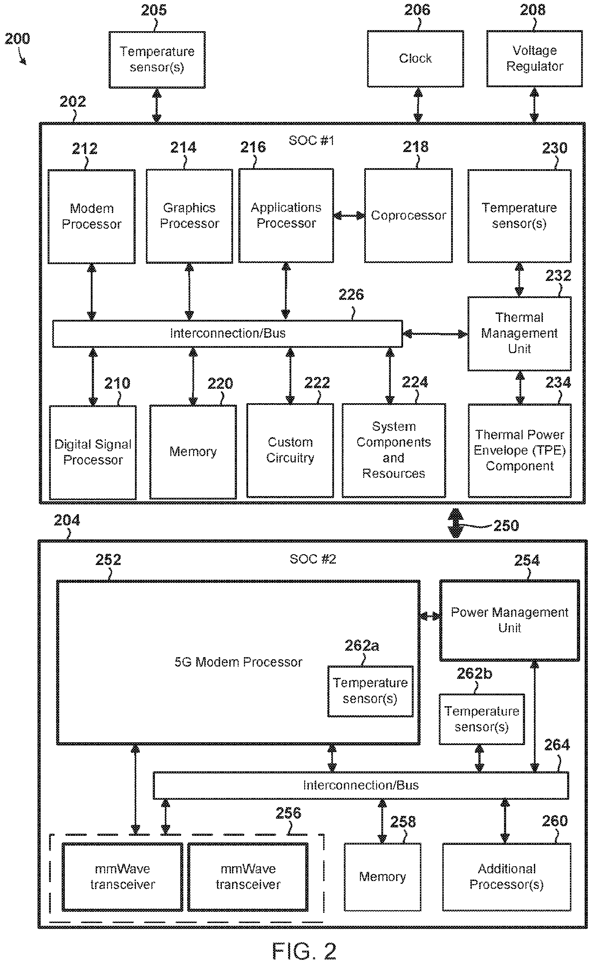

FIG. 1 illustrates an example wireless network 100, such as a new radio (NR) or 5G network, in which embodiments of the present disclosure may be performed. For example, an IoT device equipped with the system in a package (SIP) 200 illustrated in FIG. 2 may include a 5G modem processor that is configured to send and receive information via the wireless network 100.

In the example illustrated in FIG. 1, the wireless network 100 includes a number of base stations 110 and other network entities. A base station may be a station that communicates with wireless devices including IoT devices. Each base station 110 may provide communication coverage for a particular geographic area. In 3rd Generation Partnership Project (3GPP), the term "cell" can refer to a coverage area of a Node B and/or a Node B subsystem serving this coverage area, depending on the context in which the term is used. In new radio (NR) or Fifth Generation (5G) network systems, the term "cell" and eNB, Node B, 5G NB, access point (AP), NR base station, NR base station, or transmission and reception point (TRP) may be interchangeable. In some examples, a cell may not necessarily be stationary, and the geographic area of the cell may move according to the location of a mobile base station. In some examples, the base stations may be interconnected to one another and/or to one or more other base stations or network nodes (not shown) in the wireless network 100 through various types of backhaul interfaces such as a direct physical connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a frequency channel, etc. Each frequency may support a single RAT in a given geographic area in order to avoid interference between wireless networks of different RATs. Wireless networks 100 supporting IoT device communications may use or support narrowband-Internet of Thing (NB-IoT), Global System for Mobile Communications (GSM), and Voice over Long Term Evolution (VoLTE) RATs as well as other RATs (e.g., 5G).

A base station may provide communication coverage for a macro cell, a pico cell, a femto cell, and/or other types of cell. A macro cell may cover a relatively large geographic area (e.g., several kilometers in radius) and may allow unrestricted access by IoT devices with service subscription. A pico cell may cover a relatively small geographic area and may allow unrestricted access by IoT devices with service subscription. A femto cell may cover a relatively small geographic area (e.g., a home) and may allow restricted access by IoT devices having association with the femto cell (e.g., IoT devices in a Closed Subscriber Group (CSG), IoT devices for users in the home, etc.). A base station for a macro cell may be referred to as a macro base station. A base station for a pico cell may be referred to as a pico base station. A base station for a femto cell may be referred to as a femto base station or a home base station. In the example shown in FIG. 1, the base stations 110a, 110b and 110c may be macro base stations for the macro cells 102a, 102b and 102c, respectively. The base station 110x may be a pico base station for a pico cell 102x. The base stations 110y and 110z may be femto base station for the femto cells 102y and 102z, respectively. A base station may support one or multiple (e.g., three) cells. Further, base stations may support communications on multiple networks using multiple RATs, such as NB-IoT, GSM, and VoLTE.

The wireless network 100 may also include relay stations. A relay station is a station that receives a transmission of data and/or other information from an upstream station (e.g., a base station or an IoT device) and sends a transmission of the data and/or other information to a downstream station (e.g., an IoT device or a base station). A relay station may also be a wireless device that relays transmissions for other wireless devices including IoT devices. In the example shown in FIG. 1, a relay station 110r may communicate with the base station 110a and an IoT device 120r in order to facilitate communication between the base station 110a and the IoT device 120r. A relay station may also be referred to as a relay base station, a relay, etc. Further, relay stations may support communications on multiple networks using multiple RATs, such as NB-IoT, GSM, and VoLTE.

The wireless network 100 may be a heterogeneous network that includes base stations of different types, e.g., macro base station, pico base station, femto base station, relays, etc. These different types of base stations may have different transmit power levels, different coverage areas, and different impact on interference in the wireless network 100. For example, macro base station may have a high transmit power level (e.g., 20 Watts) whereas pico base station, femto base station, and relays may have a lower transmit power level (e.g., 1 Watt).

The wireless network 100 may support synchronous or asynchronous operation. For synchronous operation, the base stations may have similar frame timing, and transmissions from different base stations may be approximately aligned in time. For asynchronous operation, the base stations may have different frame timing, and transmissions from different base stations may not be aligned in time. The techniques described herein may be used for both synchronous and asynchronous operations.

A network controller 130 may be coupled to a set of base stations and provide coordination and control for these base stations. The network controller 130 may communicate with the base stations 110 via a backhaul. The base stations 110 may also communicate with one another, e.g., directly or indirectly via wireless or wireline backhaul.

The IoT devices 120 (e.g., 120x, 120y, etc.) may be dispersed throughout the wireless network 100, and each IoT device may be stationary or mobile. Some IoT devices may be considered evolved or machine-type communication (MTC) devices or evolved MTC (eMTC) devices. MTC and eMTC IoT devices include, for example, robots, drones, remote devices, sensors, meters, monitors, location tags, etc., that may communicate with a base station, another device (e.g., remote device), or some other entity. A wireless node may provide, for example, connectivity for, or to, a network (e.g., a wide area network such as Internet or a cellular network) via a wired or wireless communication link.

In FIG. 1, a solid line with double arrows indicates desired transmissions between an IoT device and a serving base station, which is a base station designated to serve the IoT device on the downlink and/or uplink. A dashed line with double arrows indicates interfering transmissions between the IoT device and a base station.

Certain wireless networks (e.g., Long Term Evolution (LTE)) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block") may be 12 subcarriers (or 180 kHz). Consequently, the nominal full frame transfer (FFT) size may be equal to 128, 256, 512, 1024 or 2048 for system bandwidth of 1.25, 2.5, 5, 10 or 20 megahertz (MHz), respectively. The system bandwidth may also be partitioned into subbands. For example, a subband may cover 1.08 MHz (i.e., 6 resource blocks), and there may be 1, 2, 4, 8 or 16 subbands for system bandwidth of 1.25, 2.5, 5, 10 or 20 MHz, respectively.

A NR base station (e.g., eNB, 5G Node B, Node B, transmission reception point (TRP), access point (AP)) may correspond to one or multiple base stations. NR cells may be configured as access cell (ACells) or data only cells (DCells). For example, the radio access network (RAN) (e.g., a central unit or distributed unit) may configure the cells. DCells may be cells used for carrier aggregation or dual connectivity, but not used for initial access, cell selection/reselection, or handover. NR base stations may transmit downlink signals to IoT devices indicating the cell type. Based on the cell type indication, the IoT device may communicate with the NR base station. For example, the IoT device may determine NR base stations to consider for cell selection, access, handover (HO), and/or measurement based on the indicated cell type.

The various embodiments may be implemented on IoT devices equipped with any of a number of single processor and multiprocessor computer systems, including a system-on-chip (SOC) or system in a package (SIP). FIG. 2 illustrates an example computing system or SIP 200 architecture that may be used in IoT devices (e.g., the IoT devices 120) implementing the various embodiments. With reference to FIGS. 1 and 2, the SIP 200 may provide all of the processing, data storage and communication capabilities required to support the mission or functionality of a given IoT device. The same SIP 200 may be used in a variety of different types of IoT devices (e.g., smart meters, smart appliances, sensors, etc.) with device-specific functionality provided via programming of one or more processors within the SIP. Further, the SIP 200 is an example of components that may be implemented in a SIP used in IoT devices and more or fewer components may be included in a SIP used in IoT devices insofar encompassed by the scope of the claims.

The example SIP 200 illustrated in FIG. 2 includes two SOCs 202, 204, a temperature sensor 205, a clock 206, and a voltage regulator 208. In some embodiments, the first SOC 202 operates as central processing unit (CPU) of the IoT device that carries out the instructions of software application programs by performing the arithmetic, logical, control and input/output (I/O) operations specified by the instructions. In some embodiments, the second SOC 204 may operate as a specialized processing unit. For example, the second SOC 204 may operate as a specialized 5G processing unit responsible for managing high volume, high speed (e.g., 5 Gbps, etc.), and/or very high frequency short wave length (e.g., 28 GHz mmWave spectrum, etc.) communications.

In the example illustrated in FIG. 2, the first SOC 202 includes a digital signal processor (DSP) 210, a modem processor 212, a graphics processor 214, an application processor 216, one or more coprocessors 218 (e.g., vector co-processor) connected to one or more of the processors, memory 220, custom circuity 222, system components and resources 224, an interconnection/bus module 226, one or more temperature sensors 230, a thermal management unit 232, and a thermal power envelope (TPE) component 234. The second SOC 204 includes a 5G modem processor 252, a power management unit 254, temperature sensors 262a 262b, an interconnection/bus module 264, a plurality of mmWave transceivers 256, memory 258, and various additional processors 260, such as an applications processor, packet processor, etc.

Each processor 210, 212, 214, 216, 218, 252, 260 may include one or more cores, and each processor/core may perform operations independent of the other processors/cores. For example, the first SOC 202 may include a processor that executes a first type of operating system (e.g., FreeBSD, LINUX, OS X, etc.) and a processor that executes a second type of operating system (e.g., MICROSOFT WINDOWS 10). In addition, any or all of the processors 210, 212, 214, 216, 218, 252, 260 may be included as part of a processor cluster architecture (e.g., a synchronous processor cluster architecture, an asynchronous or heterogeneous processor cluster architecture, etc.).

The first and second SOC 202, 204 may include various system components, resources and custom circuitry for managing sensor data, analog-to-digital conversions, wireless data transmissions, and for performing other specialized operations, such as decoding data packets and processing encoded audio and video signals for rendering in a web browser. For example, the system components and resources 224 of the first SOC 202 may include power amplifiers, voltage regulators, oscillators, phase-locked loops, peripheral bridges, data controllers, memory controllers, system controllers, access ports, timers, and other similar components used to support the processors and software clients running on an IoT device. The system components and resources 224 and/or custom circuitry 222 may also include circuitry to interface with peripheral devices, such as cameras, electronic displays, wireless communication devices, external memory chips, etc.

The first and second SOC 202, 204 may communicate via an interconnection/bus module 250. The various processors 210, 212, 214, 216, 218, may be interconnected to one or more memory elements 220, system components and resources 224, and custom circuitry 222, and a thermal management unit 232 via an interconnection/bus module 226. Similarly, the processors 252, 260 may be interconnected to the power management unit 254, the mm Wave transceivers 256, memory 258, and various additional processors 260 via the interconnection/bus module 264. The interconnection/bus module 226, 250, 264 may include an array of reconfigurable logic gates and/or implement a bus architecture (e.g., CoreConnect, AMBA, etc.). Communications may be provided by advanced interconnects, such as high-performance networks-on chip (NoCs).

The first and/or second SOCs 202, 204 may further include an input/output module (not illustrated) for communicating with resources external to the SOC, such as a clock 206 and a voltage regulator 208. Resources external to the SOC (e.g., clock 206, voltage regulator 208) may be shared by two or more of the internal SOC processors/cores.

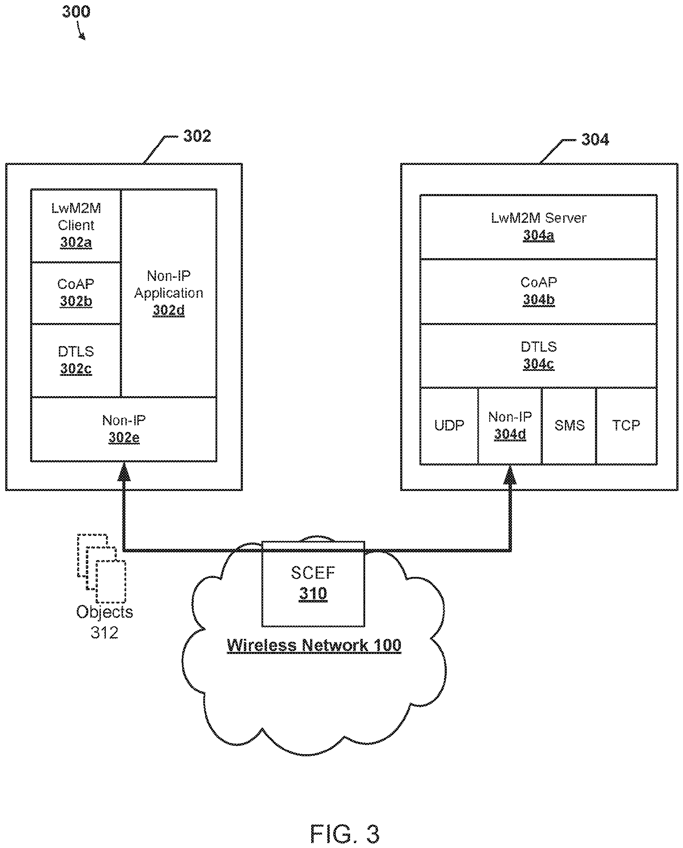

FIG. 3 illustrates an example NIDD data call architecture 300 suitable for use with various embodiments. With reference to FIGS. 1-3, the architecture 300 shows an example of a NIDD data call between an IoT device 302 (e.g., IoT devices 120) and a server 304. The architecture 300 is discussed with reference to LwM2M, but LwM2M is merely an example of an application of a NIDD data call used to illustrate aspects of the architecture 300. Other protocols, such as other OMA protocols may be used to establish a NIDD data call and the architecture 300 may apply to non-LwM2M NIDD data calls. The IoT device 302 and the server 304 may be configured to communicate using NIDD. As an example, the IoT device 302 may be a LwM2M client device. As an example, the server 304 may be a LwM2M server, such as a bootstrap server as defined by LwM2M or an LwM2M server that is not a bootstrap server. The server 304 may be an application server.

A Service Capability Exposure Function (SCEF) 310 enables NIDD communication between the IoT device 302 and the server 304. The SCEF 310 enables devices such as the IoT device 302 and the application server 304 to access certain communication services and capabilities, including NIDD. The SCEF 310 may support RDS. While illustrated as in communication with one server 304, the SCEF 310 may route traffic to multiple servers each identified by their own respective destination port. In this manner, a single NIDD data call through the SCEF 310 may include multiplexed traffic intended for multiple different destinations.

In some embodiments, the IoT device 302 may be configured with an LwM2M client 302a that uses the LwM2M device management protocol. The LwM2M device management protocol defines an extensible resource and data model. The LwM2M client 302a may employ a service-layer transfer protocol such as Constrained Application Protocol (CoAP) 302b to enable, among other things secure data transfer. The IoT device 302 may employ a communication security protocol such as Datagram Transport Layer Security (DTLS) 302c. DTLS in particular may provide security for datagram-based applications. One such application may be a Non-IP Application 302d. The Non-IP Application 302d may utilize a non-IP protocol 302e to structure non-IP communications.

In some embodiments, the server 304 may be configured with an LwM2M server 304a, a transfer protocol such as CoAP 304b, and a security protocol such as DTLS 304c. The application server 304 may be configured to utilize a variety of communication protocols, such as non-IP protocol 304d, as well as other communication protocol such as UDP, SMS, TCP, and the like.

As an example, the IoT device 302 may be a constrained device having a very small power storage device and may be configured for an operational life of years. Typical protocols for establishing IP data bearers are notoriously power hungry. In contrast, NIDD may enable the IoT device 302 to communicate small amounts of data by a control plane, rather than a user plane, without the use of an IP stack. NIDD may have particular application in NB-IoT and CIoT communications to enable constrained devices to communicate via a cellular network and send or receive small amounts of data per communication (e.g., in some cases, on the order of hundreds of bytes, tens of bytes, or smaller). NIDD may enable the IoT device 302 to embed a small amount of data in a container or object 312 without use of an IP stack, and to send the container or object 312 to the server 304 via the SCEF 310. Similarly, the IoT device 302 may receive containers or objects 312 that define services and capabilities of the network 100 the IoT device 302 may be connected to enable the IoT device 302 to reach the SCEF 310 and server 304. For example, such containers or objects 312 that define services and capabilities may include various OMA objects, such as an APN connection profile object (Object ID 11), a LwM2M server object (Object ID 1), a LwM2M security object (Object ID 0), etc.

In some embodiments, the IoT device 302 may support RDS in a NIDD data call. The IoT device 302 may multiplex uplink traffic for different servers 304 by sending the uplink traffic with a pair of source and destination port numbers and an Evolved Packets System (EPS) bearer ID. The SCEF 310 may receive uplink traffic from the IoT device 302 and may route the uplink traffic to the appropriate server, such as server 304 or any other server, based on the destination port number indicated for the uplink traffic.

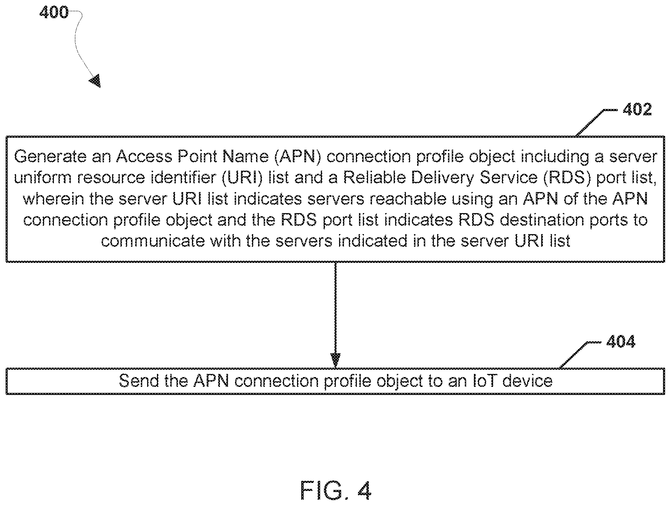

FIG. 4 illustrates a method 400 for supporting multiple simultaneous connections over a single NIDD data call by an IoT device according to some embodiments. With reference to FIGS. 1-4, the method 400 may be implemented in hardware components and/or software components of a network element (e.g., a server or other type device, such as network controller 130, etc.) the operation of which may be controlled by one or more processors.

In block 402, the processor may generate an APN connection profile object (Object ID 11) including a server uniform resource identifier (URI) list and a Reliable Delivery Service (RDS) port list, wherein the server URI list indicates servers reachable using an APN of the APN connection profile object and the RDS port list indicates RDS destination ports to communicate with the servers indicated in the server URI list. In some embodiments, there may be a 1-1 mapping between each server on a non-IP APN and an RDS destination port. In some embodiments, servers may be identified by the Server URI. In some embodiments, the APN connection profile (Object ID 11) may include multi-instance resources providing a mapping between a list of servers and the corresponding RDS destination ports within each APN connection profile instance. The server URI List resource may be a list of servers that can be reached using this APN. The RDS Destination Ports resource may be a list of RDS destination ports based on which the SCEF routes the data to appropriate servers. Each RDS destination port resource instance may map to the corresponding/matching Server URI list resource instance (e.g. RDS destination port instance 0 maps to Server URI list instance 0, etc.).

In block 404, the processor may send the APN connection profile object to an IoT device. For example, the APN connection profile object may be sent as part of the operations to enable an IoT device to establish NB-IoT and CIoT communications over the network.

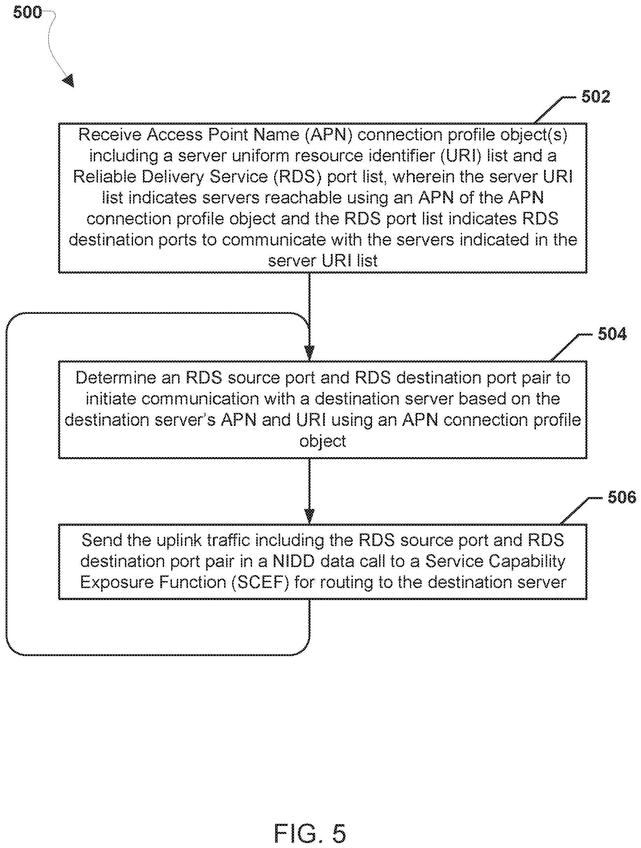

FIG. 5 illustrates a method 500 for supporting multiple simultaneous connections over a single NIDD data call by an IoT device according to some embodiments. With reference to FIGS. 1-5, the method 500 may be implemented in hardware components and/or software components of the IoT device (e.g., 120, 302, etc.), the operation of which may be controlled by one or more processors (e.g., the modem processor 212 or 252 of the SIP 200). Operations of the method 500 may be performed in conjunction with the operations of method 400 (FIG. 4).

In block 502, the processor may receive Access Point Name (APN) connection profile object(s) including a server uniform resource identifier (URI) list and a Reliable Delivery Service (RDS) port list, wherein the server URI list indicates servers reachable using an APN of the APN connection profile object and the RDS port list indicates RDS destination ports to communicate with the servers indicated in the server URI list. For example, the APN profile objects may be APN profile objects generated and sent according to the operations of method 400 (FIG. 4).

In block 504, the processor may determine an RDS source port and RDS destination port pair to initiated communication with (e.g., to send uplink traffic to) a destination server based on the destination server's APN and URI using the APN connection profile object. For example, based on the Server URI and APN, the processor may determine the RDS destination port.

In block 506, the processor may send uplink traffic including the RDS source port and the RDS destination port pair in a NIDD data call to a SCEF for routing to the destination server. Based on the APN and this RDS destination port and/or RDS source port, the SCEF will then forward the data to the corresponding server. Various embodiments may enable multiplexing of multiple simultaneous connections over a single NIDD data call to multiple RDS ports, such as two or more RDS destination ports, 16 RDS destination ports, etc. For example, the NIDD data call to the SCEF may include multiplexed uplink data for routing by the SCEF to up to 16 different RDS destination ports.

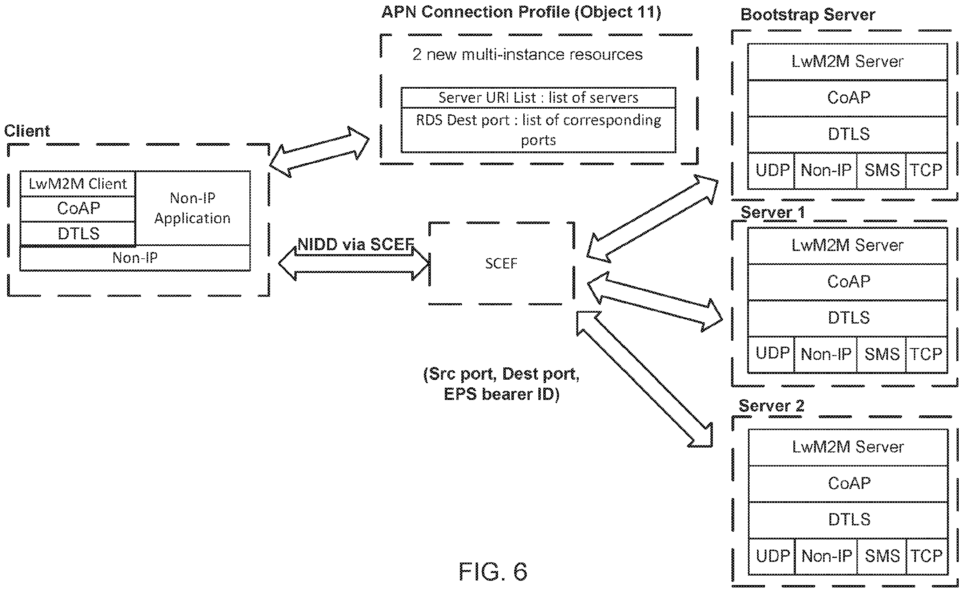

FIG. 6 is a block diagram illustrating operations according to various embodiments to support multiple simultaneous connections over a single NIDD data call by an IoT device. With reference to FIGS. 1-6, as illustrated in FIG. 6, the client may receive an APN connection profile (Object 11) including a server URI list and an RDS port list. The client may send the uplink traffic including the RDS destination port in a NIDD data call to a SCEF for routing to the destination server. Based on the APN and this RDS destination port, the SCEF will then forward the data to the corresponding server, such as the bootstrap server, server 1, or server 2. In this manner, multiplexed uplink traffic for the different servers, bootstrap server, server 1, and server 2 may be sent over the same NIDD data call through the SCEF.

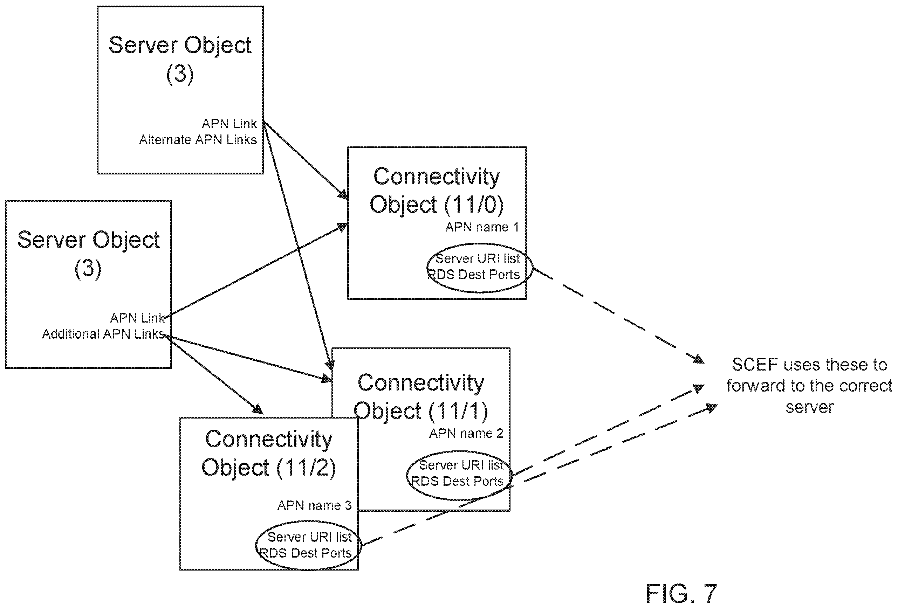

FIG. 7 is a block diagram illustrating example relationships between server objects and connectivity objects according to various embodiments. With reference to FIGS. 1-7, FIG. 7 illustrates that the correlation of the server object APN links and/or alternative APN links to the connectivity objects listing the server URIs and RDS destination ports for those servers may enable the client and SCEF to use the RDS destination ports for the servers to route uplink traffic to the servers.

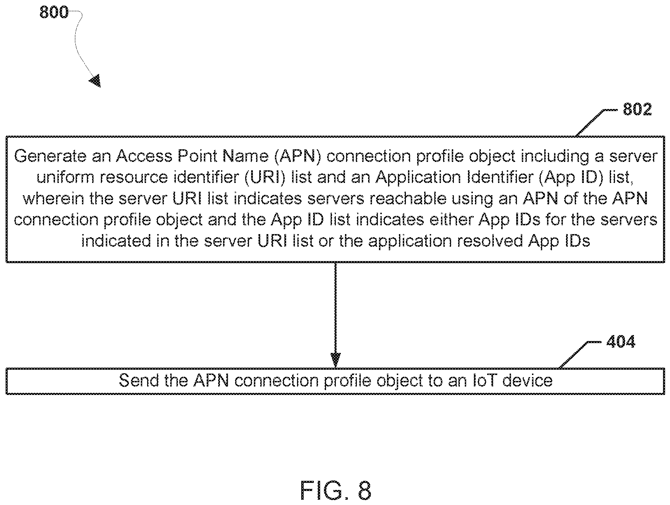

FIG. 8 illustrates a method 800 for supporting multiple simultaneous connections over a single NIDD data call by an IoT device according to some embodiments. With reference to FIGS. 1-8, the method 800 may be implemented in hardware components and/or software components of a network element (e.g., a server or other type device, such as network controller 130, etc.) the operation of which may be controlled by one or more processors.

In block 802, the processor may generate an Access Point Name (APN) connection profile object including a server uniform resource identifier (URI) list and an Application Identifier (App ID) list, wherein the server URI list indicates servers reachable using an APN of the APN connection profile object and the App ID list indicates either App IDs for the servers indicated in the server URI list or the application resolved App IDs. In some embodiments, there may be a 1-1 mapping between each server on a non-IP APN and an Application Identifier (App ID). Servers may be identified by the Server URI. Based on the App ID, an RDS Port Discovery mechanism may be used to discover an appropriate RDS destination port to forward data to the server. In some embodiments, the APN connection profile (Object 11) may include multi-instance resources to provide a mapping between each server and the corresponding App ID within each APN connection profile instance, such as a server URI List resource that may be a list of servers that can be reached using this APN and an App ID resource that may be a list of App IDs (useful to determine the RDS destination port) based on which the SCEF routes the data to appropriate servers.

As discussed with reference to method 400, in block 404, the processor may send the APN connection profile object.

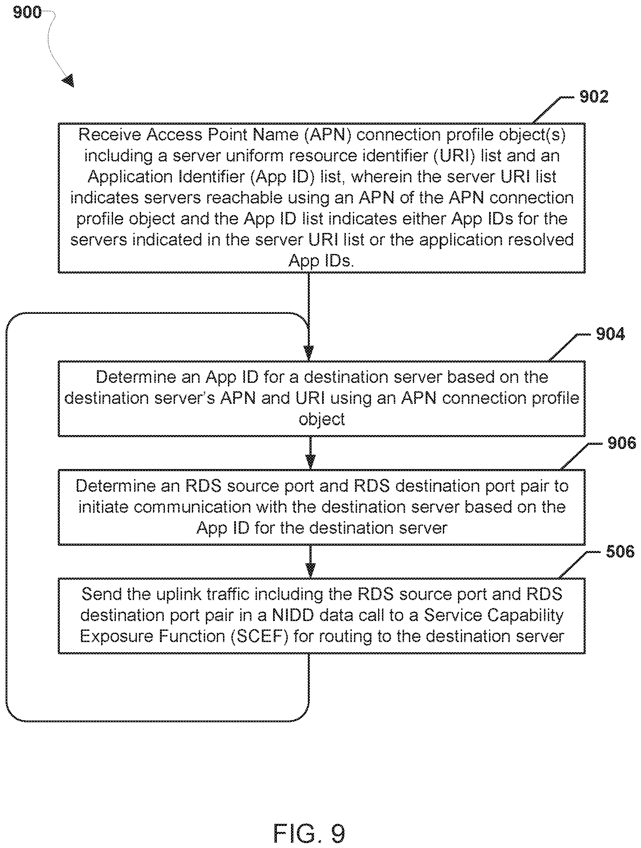

FIG. 9 illustrates a method 900 for supporting multiple simultaneous connections over a single NIDD data call by an IoT device according to some embodiments. With reference to FIGS. 1-9, the method 900 may be implemented in hardware components and/or software components of the IoT device (e.g., 120, 302, etc.), the operation of which may be controlled by one or more processors (e.g., the modem processor 212 or 252 of the SIP 200). Operations of the method 900 may be performed in conjunction with the operations of method 800 (FIG. 8).

In block 902, the processor may receive Access Point Name (APN) connection profile object(s) including a server uniform resource identifier (URI) list and an Application Identifier (App ID) list, wherein the server URI list indicates servers reachable using an APN of the APN connection profile object and the App ID list indicates either App IDs for the servers indicated in the server URI list or the application resolved App IDs. For example, the APN connection profile object may be an APN connection profile object generated according to the operations of method 800 (FIG. 8). In some embodiments, each App ID resource instance maps to the corresponding/matching Server URI List resource instance (e.g. App ID instance 0 maps to Server URI List instance 0, and so on).

In block 904, the processor may determine an App ID for a destination server based on the destination server's APN and URI using the APN connection profile object. For example for uplink traffic, the processor determines the App ID based on the Server URI.

In block 906, the processor may determine an RDS source port and RDS destination port pair to initiate communication with (e.g., to send uplink traffic to) the destination server based on the App ID for the destination server. For example, based on the App ID, an RDS Port Discovery mechanism may be used to discover an appropriate RDS destination port to forward data to the server.

As discussed with reference to method 500, in block 506, the processor may send the uplink traffic including the RDS source port and RDS destination port pair in a NIDD data call to a SCEF.

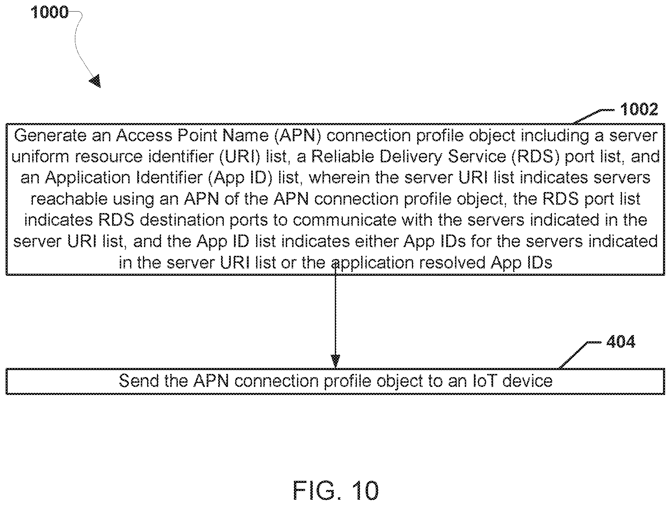

FIG. 10 illustrates a method 1000 for supporting multiple simultaneous connections over a single NIDD data call by an IoT device according to some embodiments. With reference to FIGS. 1-10, the method 1000 may be implemented in hardware components and/or software components of a network element (e.g., a server or other type device, such as network controller 130, etc.) the operation of which may be controlled by one or more processors.

In block 1002, the processor may generate an Access Point Name (APN) connection profile object including a server uniform resource identifier (URI) list, a Reliable Delivery Service (RDS) port list, and an Application Identifier (App ID) list, wherein the server URI list indicates servers reachable using an APN of the APN connection profile object, the RDS port list indicates RDS destination ports to communicate with the servers indicated in the server URI list, and the App ID list indicates either App IDs for the servers indicated in the server URI list or the application resolved App IDs. In some embodiments, an APN connection profile (Object ID 11) may provide a mapping between each server, RDS destination ports, and App IDs. Various embodiments may include generating an Access Point Name (APN) connection profile object including a server uniform resource identifier (URI) list, a Reliable Delivery Service (RDS) port list, and an Application Identifier (App ID) list, wherein the server URI list indicates servers reachable using an APN of the APN connection profile object, the RDS port list indicates RDS destination ports f to communicate with the servers indicated in the server URI list, and the App ID list indicates either App IDs for the servers indicated in the server URI list or the application resolved App IDs. The combination of RDS destination ports and App IDs listed in the APN connection profile (Object ID 11) may enable a fall back to using RDS destination ports if an App ID is not defined for a server and/or may enable fall back to using an App ID is an RDS destination port in not defined for a server. Additionally, the APN connection profile (Object ID 11) may include a mix of some server identified by only RDS destination port, some servers identified by only App ID, and some servers identified by both. For example, only App ID may be provided for non-LwM2M servers with a port discovery mechanism and App ID and RDS destinations ports may be provided for non-LwM2M servers without a port discovery mechanism.

As discussed with reference to method 400, in block 404, the processor may send the APN connection profile object.

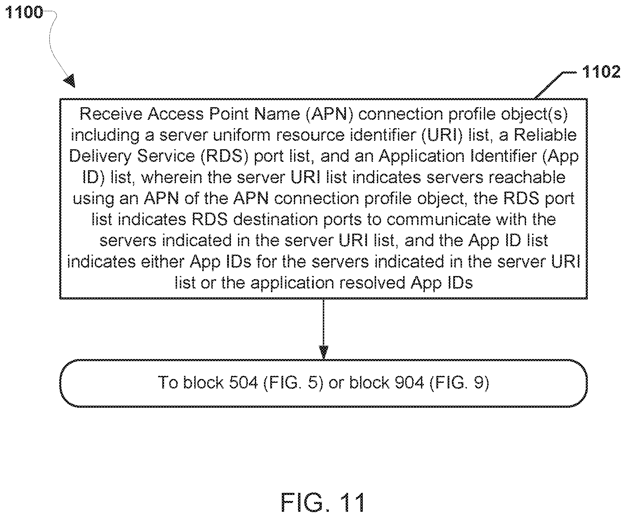

FIG. 11 illustrates a method 1100 for supporting multiple simultaneous connections over a single NIDD data call by an IoT device according to some embodiments. With reference to FIGS. 1-11, the method 1100 may be implemented in hardware components and/or software components of the IoT device (e.g., 120, 302, etc.), the operation of which may be controlled by one or more processors (e.g., the modem processor 212 or 252 of the SIP 200). Operations of the method 1100 may be performed in conjunction with the operations of method 500 (FIG. 5), the method 900 (FIG. 9), and/or method 1000 (FIG. 10).

In block 1102, the processor may receive Access Point Name (APN) connection profile object(s) including a server uniform resource identifier (URI) list, a Reliable Delivery Service (RDS) port list, and an Application Identifier (App ID) list, wherein the server URI list indicates servers reachable using an APN of the APN connection profile object, the RDS port list indicates RDS destination ports to communicate with the servers indicated in the server URI list, and the App ID list indicates either App IDs for the servers indicated in the server URI list or the application resolved App IDs. For example, the processor may receive an APN connection profile object generated according to the operations of method 1000 (FIG. 10). As the APN connection profile (Object ID 11) may provide a mapping between each server, RDS destination ports, and App IDs the operations of method 500 (FIG. 5) and/or method 900 (FIG. 9) may be used to leverage the RDS destination ports and/or App IDs to send uplink traffic over NIDD and the processor may proceed to perform operations of block 504 (FIG. 5) and/or block 904 (FIG. 9) upon receiving the APN connection profile objects.

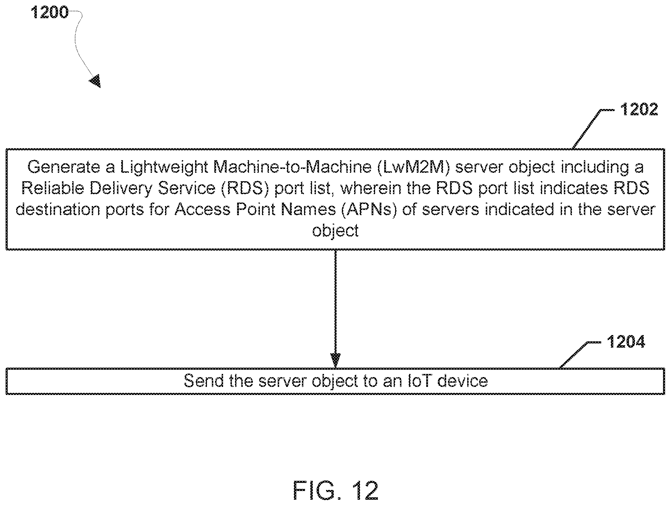

FIG. 12 illustrates a method 1200 for supporting multiple simultaneous connections over a single NIDD data call by an IoT device according to some embodiments. With reference to FIGS. 1-12, the method 1200 may be implemented in hardware components and/or software components of a network element (e.g., a server or other type device, such as network controller 130, etc.) the operation of which may be controlled by one or more processors.

In block 1202, the processor may generate a Lightweight Machine-to-Machine (LwM2M) server object including a Reliable Delivery Service (RDS) port list, wherein the RDS port list indicates RDS destination ports for Access Point Names (APNs) of servers indicated in the server object. In some embodiments, there may be a 1-1 mapping between each non-IP APN (that is referenced in the Server object) and an RDS destination port. APNs may be referenced in the Server object using the APN link resource as well as Alternate APN links resource. The RDS destination port resource instance may match the instance number of the APN link resource or the Alternate APN links resource. For simplicity, Alternate APN link resource instances may be defined starting from 1. In some embodiments, the server object (Object 1) may include multi-instance resource providing a mapping between the APNs and corresponding RDS destination ports, such as an RDS Destination Ports resource that is a list of RDS destination ports based on which the SCEF routes the data to appropriate servers.

In block 1204, the processor may send the server object to an IoT device. In some embodiments, the server object may be sent to an IoT device from a bootstrap server. In some embodiments, sending the server object to an IoT device may include pre-provisioning the server object in a memory available to the IoT device (e.g., as a factory setting stored in an installed memory of the IoT device, on a Smart Card inserted into the IoT device, etc.).

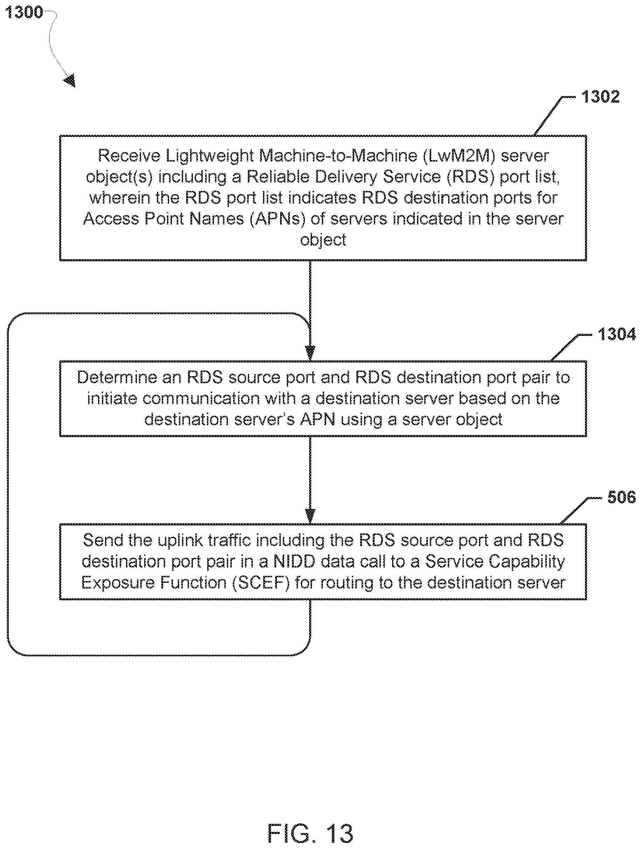

FIG. 13 illustrates a method 1300 for supporting multiple simultaneous connections over a single NIDD data call by an IoT device according to some embodiments. With reference to FIGS. 1-13, the method 1300 may be implemented in hardware components and/or software components of the IoT device (e.g., 120, 302, etc.), the operation of which may be controlled by one or more processors (e.g., the modem processor 212 or 252 of the SIP 200). Operations of the method 1300 may be performed in conjunction with the operations of method 1200 (FIG. 12).

In block 1302, the processor may receive Lightweight Machine-to-Machine (LwM2M) server object(s) including a Reliable Delivery Service (RDS) port list, wherein the RDS port list indicates RDS destination ports for Access Point Names (APNs) of servers indicated in the server object. For example, the processor may receive a server object generated according to the operations of method 1200 (FIG. 12).

In operation 1304, the processor may determine an RDS source port and RDS destination port pair to initiate communication with (e.g., to send uplink traffic to) a destination server based on the destination server's APN using the server object. In various embodiments, determining the RDS destination port for uplink traffic to the destination server based on the destination server's APN using the server object may include determining the RDS destination port for uplink traffic to the destination server based on the destination server's APN link or alternate APN link using the server object. For uplink traffic, based on the RDS destination port corresponding to the selected non-IP APN in the Server object, the client may indicate the destination port in the uplink traffic and the SCEF forwards the data to corresponding server.

As discussed with reference to method 500, in block 506, the processor may send uplink traffic including the RDS source port and RDS destination port pair in a NIDD data call to a SCEF.

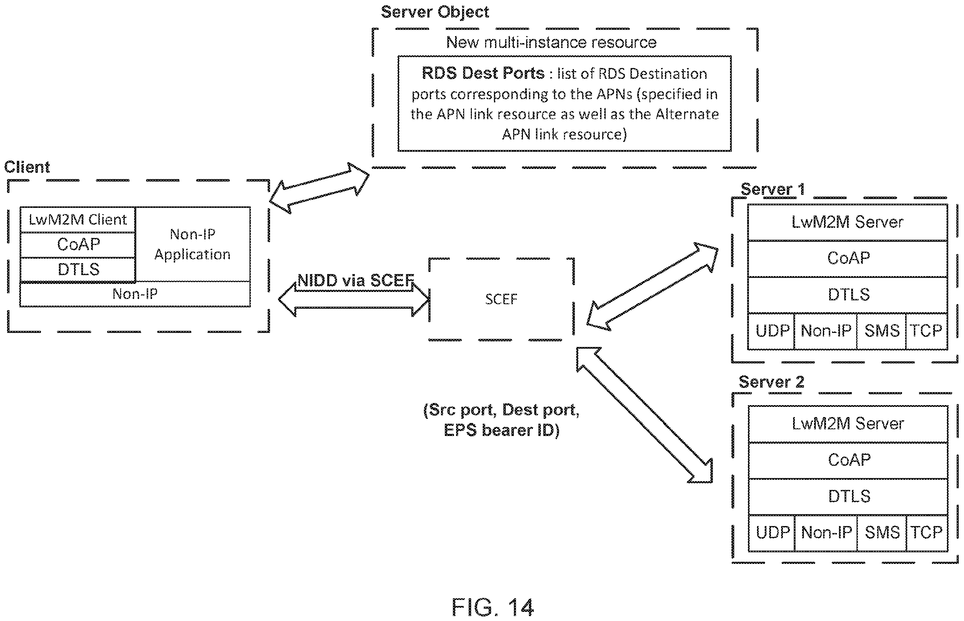

FIG. 14 is a block diagram illustrating operations according to various embodiments to support multiple simultaneous connections over a single NIDD data call by an IoT device. With reference to FIGS. 1-14, as illustrated in FIG. 14, the client may receive a server object including an RDS Destination Ports resource that is a list of RDS Destination ports corresponding to the APNs (specified in the APN link resource as well as the Alternate APN link resource). The client may send the uplink traffic including the RDS destination port in a NIDD data call to a SCEF for routing to the destination server. Based on the APN and this RDS destination port, the SCEF will then forward the data to the corresponding server, such as the server 1 or server 2. In this manner, multiplexed uplink traffic for the different servers, server 1 and server 2 may be sent over the same NIDD data call through the SCEF.

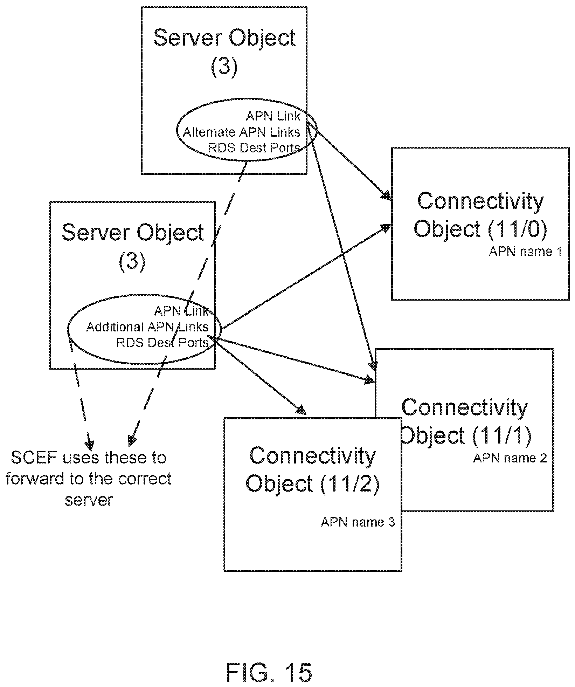

FIG. 15 is a block diagram illustrating example relationships between server objects and connectivity objects according to various embodiments. With reference to FIGS. 1-15, as illustrated in FIG. 15, the correlation of the server object APN links and/or alternative APN links including the RDS destination ports to the connectivity objects listing may enable the client and SCEF to use the RDS destination ports for the servers to route uplink traffic to the servers. Assuming the following resources exist in the Server Object: Alternate APN Links (Resource ID 25) and RDS Destination Port resource (Resource ID 26), the RDS Destination Port resource instance may map to the same instance number of the APN link resource or the Alternate APN links resource. For simplicity, Alternate APN links resource instances may be defined starting from 1. In this case: 1/x/26/0 corresponds to 1/x/10/0 (APN link resource instance), 1/x/26/1 corresponds to 1/x/25/1, and 1/x/26/2 corresponds to 1/x/25/2.

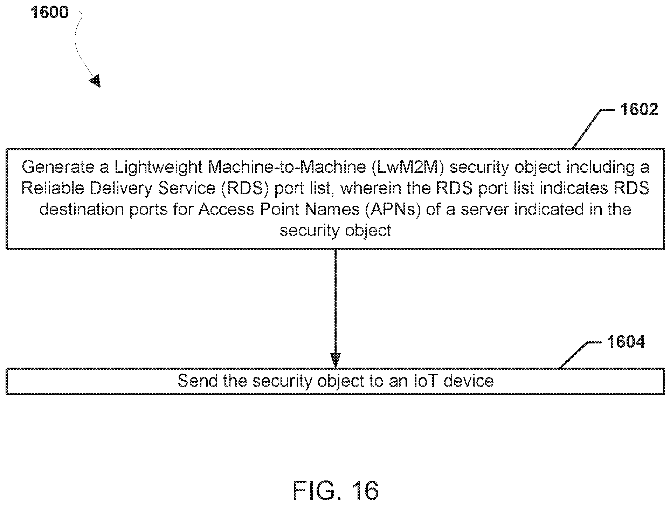

FIG. 16 illustrates a method 1600 for supporting multiple simultaneous connections over a single NIDD data call by an IoT device according to some embodiments. With reference to FIGS. 1-16, the method 1600 may be implemented in hardware components and/or software components of a network element (e.g., a server or other type device, such as network controller 130, etc.) the operation of which may be controlled by one or more processors.

In block 1602, the processor may generate a Lightweight Machine-to-Machine (LwM2M) security object including a Reliable Delivery Service (RDS) port list, wherein the RDS port list indicates RDS destination ports for Access Point Names (APNs) of a server indicated in the security object. In some embodiments, there may be a 1-1 mapping between each non-IP APN (APN connection profile instance) and an RDS destination port. A security object may only correspond to a single server. The mapping may be between RDS ports and the APN connection profile instance. In some embodiments, the RDS destination port resource instance maps to the corresponding APN connection profile instance (e.g. RDS destination port instance 0 maps to APN connection profile instance 0, etc.). In some embodiments, the a multi-instance resource in the Security Object (Object 0) may provide RDS destination ports corresponding to each non-IP APN connection profile (Object 11) instance, such as an RDS Destination Ports resource that may be a list of RDS destination ports based on which the SCEF routes the data to appropriate servers.

In block 1604, the processor may send the security object to an IoT device.

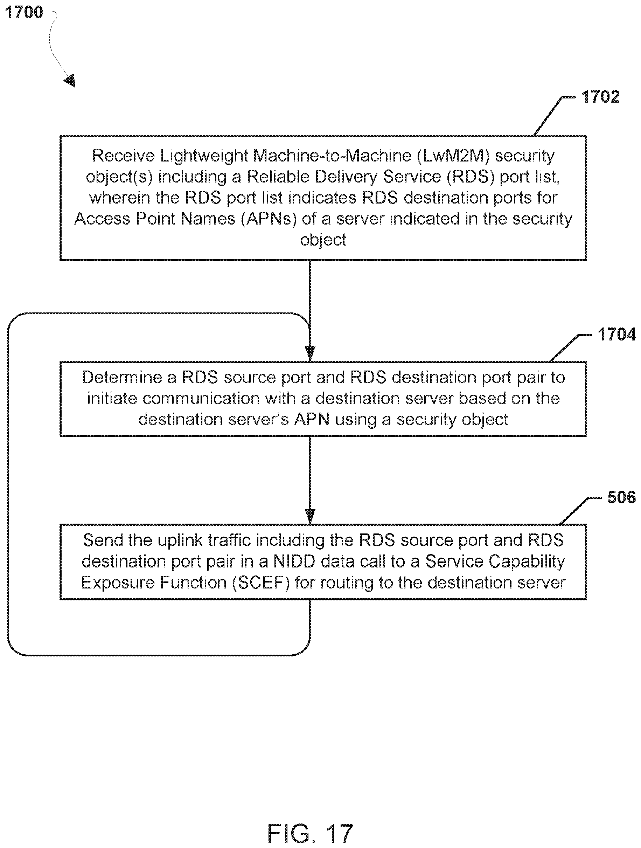

FIG. 17 illustrates a method 1700 for supporting multiple simultaneous connections over a single NIDD data call by an IoT device according to some embodiments. With reference to FIGS. 1-17, the method 1700 may be implemented in hardware components and/or software components of the IoT device (e.g., 120, 302, etc.), the operation of which may be controlled by one or more processors (e.g., the modem processor 212 or 252 of the SIP 200). Operations of the method 1700 may be performed in conjunction with the operations of method 1600 (FIG. 16).

In block 1702, the processor may receive Lightweight Machine-to-Machine (LwM2M) security object(s) including a Reliable Delivery Service (RDS) port list, wherein the RDS port list indicates RDS destination ports for Access Point Names (APNs) of a server indicated in the security object. For example, the processor may receive a security object generated according to the operations of method 1600 (FIG. 16).

In block 1704, the processor may determine an RDS source port and RDS destination port pair to initiate communication with (e.g., to send uplink traffic to) a destination server based on the destination server's APN using the security object. In some embodiments, for uplink traffic, based on the APN and the RDS destination port (in the Security Object), a client may select the RDS destination port for uplink traffic such that the SCEF forwards the data to the corresponding server.

As discussed with reference to method 500, in block 506, the processor may send the uplink traffic including the RDS source port and RDS destination port pair in a NIDD data call to a SCEF.

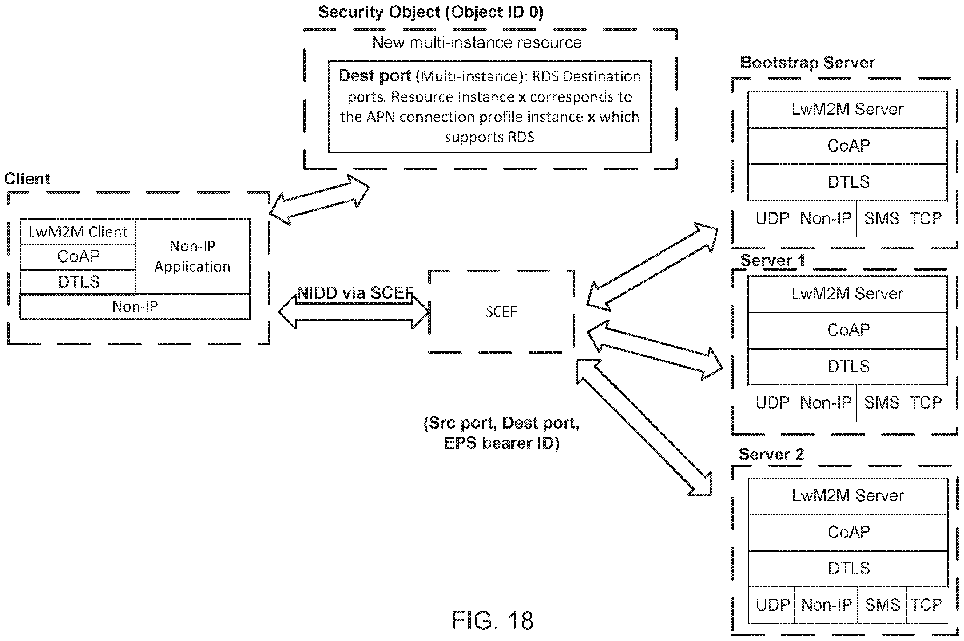

FIG. 18 is a block diagram illustrating operations according to various embodiments to support multiple simultaneous connections over a single NIDD data call by an IoT device. With reference to FIGS. 1-18, as illustrated in FIG. 18, the client may receive a security object (object ID 0) an RDS port list. The client may send the uplink traffic including the RDS destination port in a NIDD data call to a SCEF for routing to the destination server. Based on the APN and this RDS destination port, the SCEF will then forward the data to the corresponding server, such as the bootstrap server, server 1, or server 2. In this manner, multiplexed uplink traffic for the different servers, bootstrap server, server 1, and server 2 may be sent over the same NIDD data call through the SCEF.

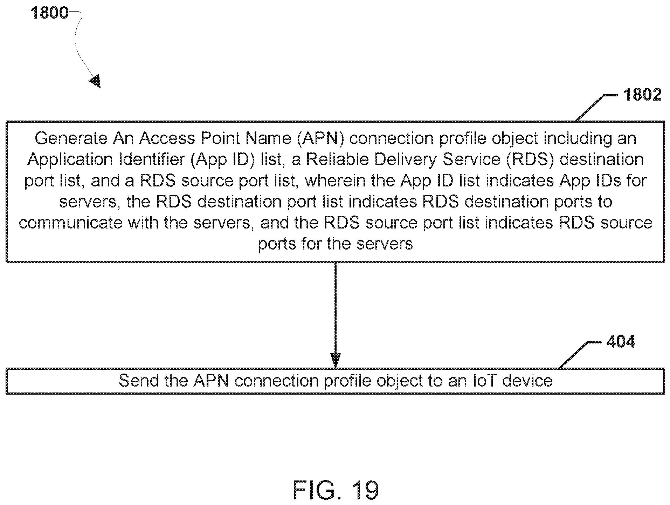

FIG. 19 is a process flow diagram illustrating a method 1800 for supporting multiple simultaneous connections over a single NIDD data call by an IoT device. With reference to FIGS. 1-19, the method 1800 may be implemented in hardware components and/or software components of a network element (e.g., a server or other type device, such as network controller 130, etc.) the operation of which may be controlled by one or more processors.

In block 1802, the processor may generate an Access Point Name (APN) connection profile object including an Application Identifier (App ID) list, a Reliable Delivery Service (RDS) destination port list, and a RDS source port list, wherein the App ID list indicates App IDs for servers, the RDS destination port list indicates RDS destination ports to communicate with the servers, and the RDS source port list indicates RDS source ports to communicate with the servers. In some embodiments, there may be a 1-1 mapping between each server on a non-IP APN and an Application Identifier (App ID). Servers may be identified by their App ID. In some embodiments, an APN connection profile (Object ID 11) may include an RDS source port list and RDS destination port list in which RDS ports are correlated with the App IDs of the LwM2M servers associated with the respective ports. In some embodiments, the APN connection profile (Object 11) may include multi-instance resources to provide a mapping between each server and the corresponding App ID within each APN connection profile instance, such as an RDS source port list and RDS destination port list.

In block 404, the processor may send the APN connection profile object as described for the method 400 with reference to FIG. 4.

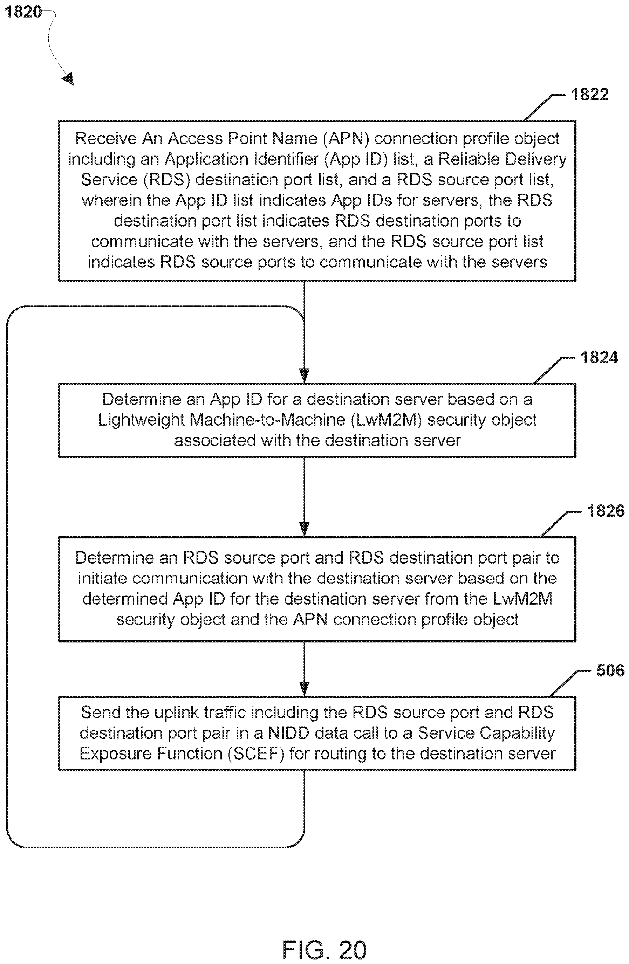

FIG. 20 is a process flow diagram illustrating a method 1820 for supporting multiple simultaneous connections over a single NIDD data call by an IoT device. With reference to FIGS. 1-20, the method 1820 may be implemented in hardware components and/or software components of the IoT device (e.g., 120, 302, etc.), the operation of which may be controlled by one or more processors (e.g., the modem processor 212 or 252 of the SIP 200). Operations of the method 1820 may be performed in conjunction with the operations of method 1800 (FIG. 19).

In block 1822, the processor may receive an Access Point Name (APN) connection profile object including an App ID list, a RDS destination port list, and an RDS source port list, wherein the App ID list indicates App IDs for servers, the RDS destination port list indicates RDS destination ports to communicate with the servers, and the RDS source port list indicates RDS source ports to communicate with the servers. For example, the APN connection profile object may be an APN connection profile object generated according to the operations of method 1800 (FIG. 19). In some embodiments, each App ID resource instance maps to the corresponding/matching RDS source port instance and RDS destination port instance (e.g. App ID instance 0 maps to RDS destination port 0 and RDS source port 0, and so on).

In block 1824, the processor may determine an App ID for a destination server based on an LwM2M security object associated with the destination server. For example, the processor may determine the App ID for the server by parsing the LwM2M security object for the server.

In block 1826, the processor may determine an RDS source port and RDS destination port pair to initiate communication with the destination server based on the App ID for the destination server from the LwM2M security object and the APN connection profile object. The processor may determine the RDS source port and RDS destination port pair to use for uplink traffic to the destination server. To select the correct RDS source port and RDS destination port pair from RDS source port lists and RDS destination port lists in the APN connection profile object, the processor may use App ID of the destination server instance in the App ID list in the APN connection profile that matches the App ID of the destination server from the LwM2M security object as a reference into the RDS source port lists and the RDS destination port lists. For example, the processor may compare the App ID to the APN connection profile object to determine a matching App ID in the App ID list in the APN connection profile object and may determine the RDS destination port for uplink traffic to be the RDS destination port associated with the matching App ID in the RDS destination port list. For example, the processor may compare the App ID to the APN connection profile object to determine a matching App ID in the App ID list in the APN connection profile object and may determine the RDS source port for uplink traffic to be the RDS source port associated with the matching App ID in the RDS source port list.

In block 506, the processor may send the uplink traffic including the RDS source port and RDS destination port pair in a NIDD data call to a SCEF as described in the method 500 with reference to FIG. 5. The processor may the repeat the operations in blocks 1824, 1826 and 506 as described.

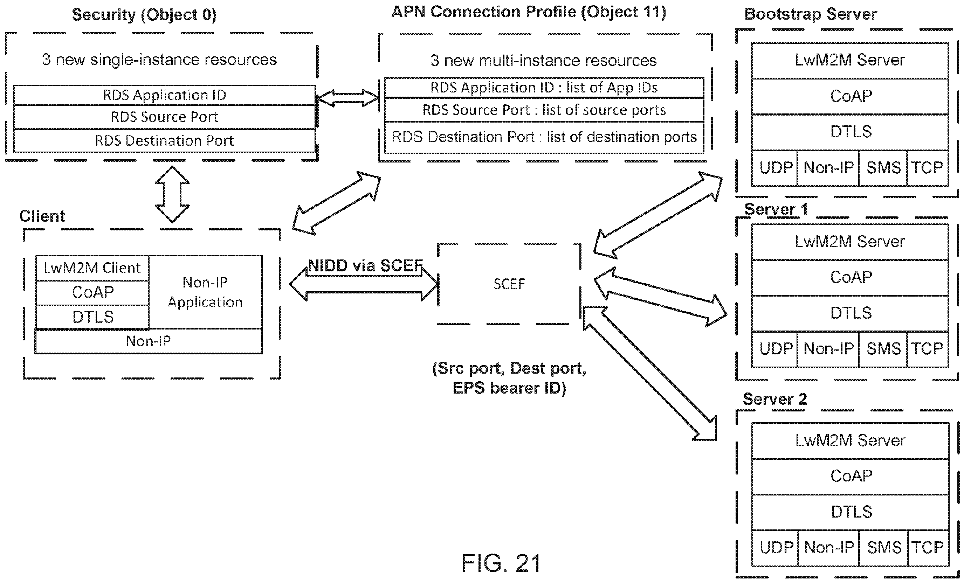

FIG. 21 is a block diagram illustrating operations according to various embodiments to support multiple simultaneous connections over a single NIDD data call by an IoT device. With reference to FIGS. 1-21, as illustrated in FIG. 21, the client may receive a LwM2M security object (e.g., Object 0) indicating an RDS application ID. The client may also receive an APN connection profile object (e.g., Object 11) including an App ID list, an RDS destination port list, and an RDS source port list. The App ID list may indicate App IDs for servers. The RDS destination port list may indicate RDS destination ports for those servers. The RDS source port list may indicate RDS source ports for those servers. The client may use the App ID for a server in the LwM2M security object for that server to determine the RDS destination port and the RDS source port for that server from the APN connection profile object based on the App ID for the server. The client may send the uplink traffic including the RDS destination port in a NIDD data call to a SCEF for routing to the destination server. Based on the APN and this RDS destination port, the SCEF may then forward the data to the corresponding server, such as the server 1 or server 2. In this manner, multiplexed uplink traffic for the different servers, server 1 and server 2 may be sent over the same NIDD data call through the SCEF.

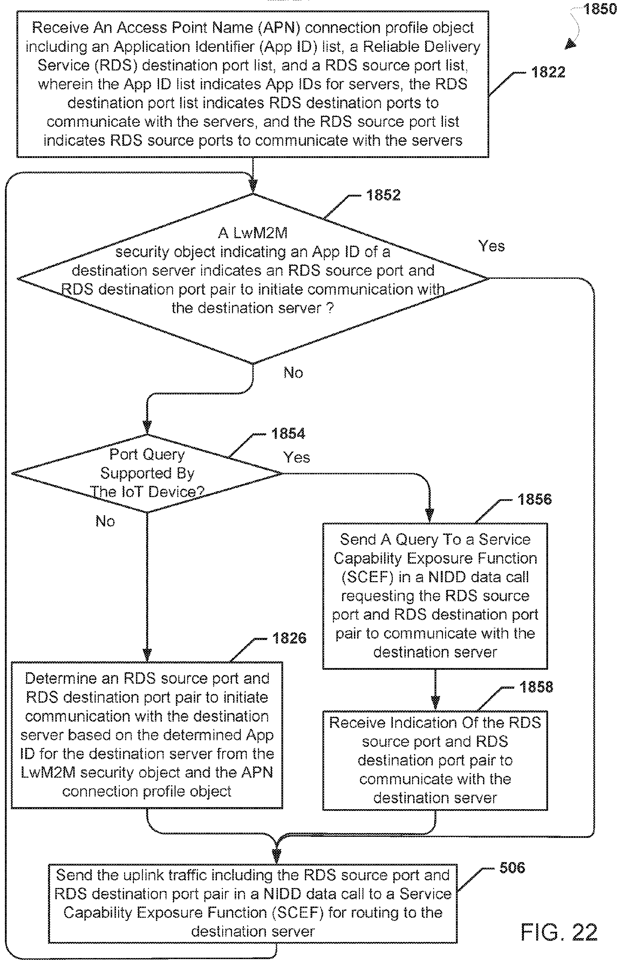

FIG. 22 is a process flow diagram illustrating a method 1850 for supporting multiple simultaneous connections over a single NIDD data call by an IoT device. With reference to FIGS. 1-22, the method 1850 may be implemented in hardware components and/or software components of the IoT device (e.g., 120, 302, etc.), the operation of which may be controlled by one or more processors (e.g., the modem processor 212 or 252 of the SIP 200). Operations of the method 1850 may be performed in conjunction with the operations of method 1800 (FIG. 19).

In block 1822, the processor may receive an APN connection profile object including an App ID list, a RDS destination port list, and a RDS source port list, wherein the App ID list indicates App IDs for servers, the RDS destination port list indicates RDS destination ports to communicate with the servers, and the RDS source port list indicates RDS source ports to communicate with the servers as described in the method 1820 with reference to FIG. 20.

In determination block 1852, the processor may determine whether a LwM2M security object indicating an App ID of a destination server indicates an RDS source port and RDS destination port pair to communicate with the destination server and an RDS source port for the destination server. LwM2M security objects may optionally include the RDS port information for destination servers. When the RDS port information is included in the security object for a destination server, the RDS port information may be used by the processor to send uplink data to the destination server. When the RDS port information is not included in the security object for a destination server, the RDS port information may be made available to the processor via other objects and/or discovery mechanisms. The processor may determine whether a LwM2M security object indicating an App ID of a destination server indicates a RDS destination port for the destination server and a RDS source port for the destination server by parsing the LwM2M security object to locate resources in the LwM2M security object corresponding to an App ID for the destination server, a RDS destination port for the destination server, and an RDS source port for the destination server. The presence of resources corresponding to an App ID for the destination server, a RDS destination port for the destination server, and an RDS source port for the destination server may indicate that the LwM2M security object indicates an App ID of a destination server and indicates an RDS destination port for the destination server and an RDS source port for the destination server. The lack of a resource corresponding to an App ID, RDS destination port, or RDS source port for the destination server may indicate that the LwM2M security object does not indicate an App ID of a destination server, an RDS destination port for the destination server, or an RDS source port for the destination server.

In response to determining that the LwM2M security object indicating the App ID of the destination server does not indicate the RDS destination port for the destination server and the RDS source port for the destination server (i.e., determination block 1852 = "No"), the processor may determine whether a port query is supported by the IoT device in determination block 1854. Port queries may be queries sent from the IoT device to a SCEF to discover RDS port information (e.g., RDS destination ports and/or RDS source ports) for a destination server. Port queries may be requests for the RDS port information, such as RDS destination ports and/or RDS source ports, based on the App ID associated with the destination server, such as the App ID indicated in the LwM2M security object.

In response to determining that port queries are supported by the IoT device (i.e., determination block 1854 = "Yes"), the processor may send a query to a SCEF in a NIDD data call requesting the RDS source port and the RDS destination port pair to communicate with the destination server and the RDS source port for the destination server in block 1856. The query may indicate the App ID of the destination server. In block 1858, the processor may receive the indication of the RDS destination port for the destination server and the RDS source port for the destination server. For example, the indication of the RDS destination port for the destination server and the RDS source port for the destination server may be received in a response message from the SCEF.

In response to determining that port queries are not supported by the IoT device (i.e., determination block 1854 = "No"), the processor may determine an RDS source port and RDS destination port to communicate with the destination server based on the App ID for the destination server and the APN connection profile object in block 1826 of the method 1820 as described with reference to FIG. 20. For example, the processor may determine an RDS source port and RDS destination port for uplink traffic to the destination server.

In response to determining that the LwM2M security object indicating an App ID of a destination server indicates an RDS destination port for the destination server and an RDS source port for the destination server (i.e., determination block 1852 = "Yes"), or following the operations in blocks 1826 or 1858, the processor may send the uplink traffic including the RDS source port and RDS destination port pair in a NIDD data call to a SCEF in block 506 of the method 500 as described with reference to FIG. 5. The processor may the repeat the operations in blocks 1852, 1854, 1856, 1858, 1826 and 506 as described.

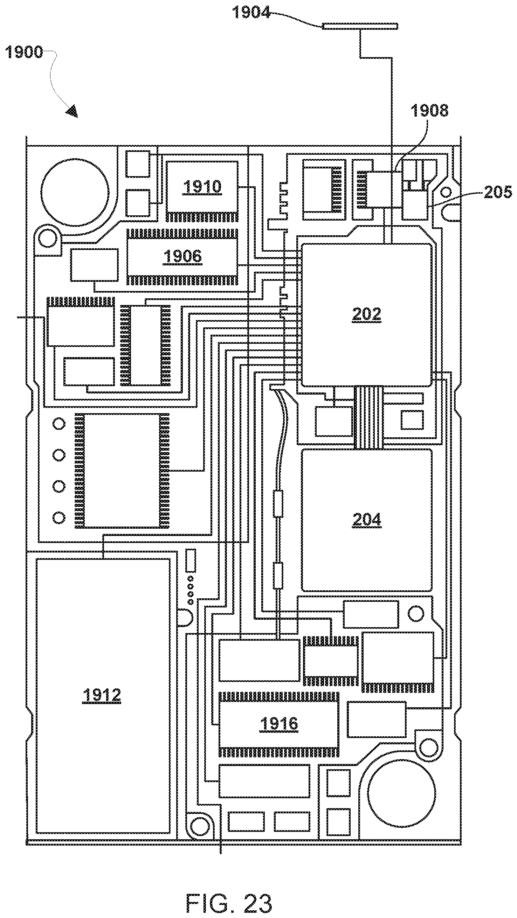

The various embodiments may be implemented on a variety of IoT devices, an example in the form of a circuit board for use in a device is illustrated in FIG. 23. With reference to FIGs. 1-23, an IoT device 1900 may include a first SOC 202 (e.g., a SOC-CPU) coupled to a second SOC 204 (e.g., a 5G capable SOC) and a temperature sensor 205. The first and second SOCs 202, 204 may be coupled to internal memory 1906. Additionally, the IoT device 1900 may include or be coupled to an antenna 1904 for sending and receiving wireless signals from a cellular telephone transceiver 1908 or within the second SOC 204. The antenna 1904 and transceiver 1908 and/or second SOC 204 may support communications using various RATs, including NB-IoT, CIoT, GSM, and/or VoLTE.

A IoT device 1900 may also include a sound encoding/decoding (CODEC) circuit 1910, which digitizes sound received from a microphone into data packets suitable for wireless transmission and decodes received sound data packets to generate analog signals that are provided to a speaker to generate sound in support of voice or VoLTE calls. Also, one or more of the processors in the first and second SOCs 202, 204, wireless transceiver 1908 and CODEC 1910 may include a digital signal processor (DSP) circuit (not shown separately).

Some IoT devices may include an internal power source, such as a battery 1912 configured to power the SOCs and transceiver(s). Such IoT devices may include power management components 1916 to manage charging of the battery 1912.

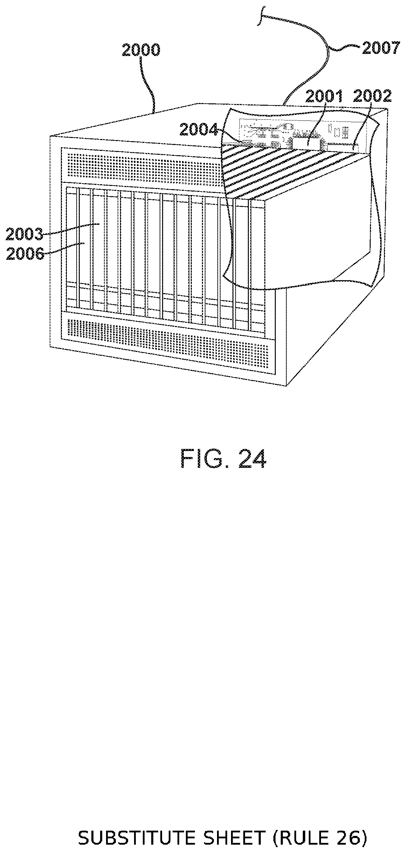

The various embodiments may also be implemented on any of a variety of commercially available server devices, such as the server 2000 illustrated in FIG. 24. With reference to FIGS. 1-24, such a server 2000 typically includes a processor 2001 coupled to volatile memory 2002 and a large capacity nonvolatile memory, such as a disk drive 2003. The server 2000 may also include a floppy disc drive, compact disc (CD) or digital versatile disc (DVD) drive 2006 coupled to the processor 2001. The server 2000 may also include one or more network transceivers 2004, such as a network access port, coupled to the processor 2001 for establishing network interface connections with a communication network 2007, such as a local area network coupled to other announcement system computers and servers, the Internet, the public switched telephone network, and/or a cellular network (e.g., CDMA, TDMA, GSM, PCS, 3G, 4G, 5G, LTE, or any other type of cellular network).

The processors used in any embodiments may be any programmable microprocessor, microcomputer or multiple processor chip or chips that can be configured by software instructions (applications) to perform a variety of functions, including the functions of the various embodiments described in this application. In some IoT devices, multiple processors may be provided, such as one processor dedicated to wireless communication functions (e.g., in SOC 204) and one processor dedicated to running other applications (e.g., in SOC 202). Typically, software applications may be stored in the internal memory 220, 258, 1906, before they are accessed and loaded into a processor. The processor may include internal memory sufficient to store the application software instructions.

As used in this application, the terms "component," "module," "system," and the like are intended to include a computer-related entity, such as, but not limited to, hardware, firmware, a combination of hardware and software, software, or software in execution, which are configured to perform particular operations or functions. For example, a component may be, but is not limited to, a process running on a processor, a processor, an object, an executable, a thread of execution, a program, and/or a computer. By way of illustration, both an application running on an IoT device and the IoT device may be referred to as a component. One or more components may reside within a process and/or thread of execution and a component may be localized on one processor or core and/or distributed between two or more processors or cores. In addition, these components may execute from various non-transitory computer readable media having various instructions and/or data structures stored thereon. Components may communicate by way of local and/or remote processes, function or procedure calls, electronic signals, data packets, memory read/writes, and other known network, computer, processor, and/or process related communication methodologies.

A number of different cellular and mobile communication services and standards are available or contemplated in the future, all of which may implement and benefit from the various embodiments. Such services and standards include, e.g., third generation partnership project (3GPP), long term evolution (LTE) systems, third generation wireless mobile communication technology (3G), fourth generation wireless mobile communication technology (4G), fifth generation wireless mobile communication technology (5G), global system for mobile communications (GSM), universal mobile telecommunications system (UMTS), 3GSM, general packet radio service (GPRS), code division multiple access (CDMA) systems (e.g., cdmaOne, CDMA1020TM), enhanced data rates for GSM evolution (EDGE), advanced mobile phone system (AMPS), digital AMPS (IS-136/TDMA), evolution-data optimized (EV-DO), digital enhanced cordless telecommunications (DECT), Worldwide Interoperability for Microwave Access (WiMAX), wireless local area network (WLAN), Wi-Fi Protected Access I & II (WPA, WPA2), and integrated digital enhanced network (iden). Each of these technologies involves, for example, the transmission and reception of voice, data, signaling, and/or content messages. It should be understood that any references to terminology and/or technical details related to an individual telecommunication standard or technology are for illustrative purposes only, and are not intended to limit the scope of the claims to a particular communication system or technology unless specifically recited in the claim language.

Various embodiments illustrated and described are provided merely as examples to illustrate various features of the claims. Further, the claims are not intended to be limited by any one example embodiment.

The foregoing method descriptions and the process flow diagrams are provided merely as illustrative examples and are not intended to require or imply that the operations of various embodiments must be performed in the order presented. As will be appreciated by one of skill in the art the order of operations in the foregoing embodiments may be performed in any order. Words such as "thereafter," "then," "next," etc. are not intended to limit the order of the operations; these words are used to guide the reader through the description of the methods. Further, any reference to claim elements in the singular, for example, using the articles "a," "an," or "the" is not to be construed as limiting the element to the singular.

Various illustrative logical blocks, modules, components, circuits, and algorithm operations described in connection with the embodiments disclosed herein may be implemented as electronic hardware, computer software, or combinations of both. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such embodiment decisions should not be interpreted as causing a departure from the scope of the claims.

The hardware used to implement various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of receiver smart objects, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In one or more embodiments, the functions described may be implemented in hardware, software, firmware, or any combination thereof. If implemented in software, the functions may be stored as one or more instructions or code on a non-transitory computer-readable storage medium or non-transitory processor-readable storage medium. The operations of a method or algorithm disclosed herein may be embodied in a processor-executable software module or processor-executable instructions, which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage smart objects, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

The preceding description of the disclosed embodiments is provided to enable any person skilled in the art to make or use the claims. Various modifications to these embodiments will be readily apparent to those skilled in the art, and the generic principles defined herein may be applied to other embodiments without departing from the scope of the claims.

## Claims

1. A method (1850) for supporting multiple simultaneous connections over a single non-Internet Protocol ,non-IP, data delivery ,NIDD, data call by an Internet of Things ,IoT, device, comprising:
receiving (1822), by a processor of the IoT device, an Access Point Name ,APN, connection profile object including an Application Identifier App ID, list, a Reliable Delivery Service ,RDS, destination port list, and an RDS source port list, wherein the App ID list indicates App IDs for destination servers, the RDS destination port list indicates RDS destination ports to communicate with the servers, and the RDS source port list indicates RDS source ports to communicate with the servers;
determining (1852), by the processor, whether a Lightweight Machine-to-Machine ,LwM2M, security object indicating an Application Identifier App ID, of a destination server indicates an RDS source port and RDS destination port pair to communicate with the destination server;
determining (1854), by the processor, whether a port query is supported by the IoT device in response to determining that the LwM2M security object indicating the App ID of the destination server does not indicate the RDS destination port and RDS source port pair to communicate with the destination server; and
sending (1856), by the processor, a query to a Service Capability Exposure Function ,SCEF, in a NIDD data call requesting the RDS source port and RDS destination port pair to communicate with the destination server in response to determining that a port query is supported by the IoT device.

2. The method (1850) of claim 1, further comprising:
determining (1824), by the processor, an App ID for a destination server based on a Lightweight Machine-to-Machine ,LwM2M, security object associated with the destination server;
determining (1826), by the processor, an RDS source port and RDS destination port pair to initiate communication with the destination server based on the determined App ID for the destination server from the LwM2M security object and the APN connection profile object; and
sending (506), by the processor, uplink traffic including the RDS source port and RDS destination port pair in a NIDD data call to a Service Capability Exposure Function ,SCEF, for routing to the destination server.

3. The method (1850) of claim 1, further comprising:
determining (1826), by the processor, the RDS source port and RDS destination port pair to communicate with the destination server based on the App ID for the destination server and the APN connection profile object in response to determining that port queries are not supported by the IoT device; and
sending (506), by the processor, uplink traffic including the RDS source port and RDS destination port pair in a NIDD data call to the SCEF for routing to the destination server.

4. The method (1850) of claim 3, wherein:
the loT device is an LwM2M client device; and
the destination server is an LwM2M server, such as a LwM2M bootstrap server.

5. The method (1850) of claim 3, wherein the NIDD data call simultaneously routes uplink traffic for up to 16 RDS destination ports.

6. The method (1850) of claim 2, wherein determining (1824) the App ID for the destination server based on the LwM2M security object associated with the destination server comprises determining the App ID for the destination server based at least in part on the App ID list in the APN connection profile object.

7. The method (1850) of claim 1, further comprising:
determining, by the processor, whether an RDS source port and RDS destination port pair to initiate communication with the destination server is indicated in a Lightweight Machine-to-Machine ,LwM2M, security object associated with the destination server; and
sending (506), by the processor, uplink traffic including the RDS source port and RDS destination port pair in a NIDD data call to a Service Capability Exposure Function ,SCEF, for routing to the destination server in response to determining that the RDS source port and RDS destination port pair to initiate communication with the destination server is indicated in the LwM2M security object.

8. The method (1850) of claim 7, further comprising:
determining, by the processor, the RDS source port and RDS destination port pair to initiate communication with the destination server based on the determined App ID for the destination server from the LwM2M security object and the APN connection profile object as a reference into the RDS source port list and the RDS destination port list in response to determining that the RDS source port and RDS destination port pair to initiate communication with the destination server are not indicated in the LwM2M security object; and
sending (506), by the processor, upling traffic including the RDS source port and RDS destination port pair in a NIDD data call to the SCEF for routing to the destination server.

9. An Internet of Things ,IoT, device (1900), comprising:
a processor (202) configured with processor-executable instructions which, when executed by the processor, cause the processor to:
receive an Access Point Name ,APN, connection profile object including an Application Identifier App ID, list, a Reliable Delivery Service ,RDS, destination port list, and an RDS source port list, wherein the App ID list indicates App IDs for destination servers, the RDS destination port list indicates RDS destination ports to communicate with the servers, and the RDS source port list indicates RDS source ports to communicate with the servers;
determine whether a Lightweight Machine-to-Machine ,LwM2M, security object indicating an Application Identifier App ID, of a destination server indicates an RDS source port and RDS destination port pair to communicate with the destination server;
determine whether a port query is supported by the IoT device (1900) in response to determining that the LwM2M security object indicating the App ID of the destination server does not indicate the RDS destination port and RDS source port pair to communicate with the destination server; and
send a query to a Service Capability Exposure Function ,SCEF, in a NIDD data call requesting the RDS source port and RDS destination port pair to communicate with the destination server in response to determining that a port query is supported by the IoT device (1900).

10. The IoT device (1900) of claim 9, wherein the processor (202) is further configured with processor-executable instructions to:
determine an App ID for a destination server based on a Lightweight Machine-to-Machine ,LwM2M, security object associated with the destination server;
determine an RDS source port and RDS destination port pair to initiate communication with the destination server based on the determined App ID for the destination server from the LwM2M security object and the APN connection profile object; and
send uplink traffic including the RDS source port and RDS destination port pair in a NIDD data call to a Service Capability Exposure Function ,SCEF, for routing to the destination server.

11. The loT device (1900) of claim 9, wherein the processor (202) is further configured with processor-executable instructions to:
determine the RDS source port and RDS destination port pair to communicate with the destination server based on the App ID for the destination server and the APN connection profile object in response to determining that port queries are not supported by the loT device (1900); and
send uplink traffic including the RDS source port and RDS destination port pair in a NIDD data call to the SCEF for routing to the destination server.

12. The loT device (1900) of claim 11, wherein:
the loT device (1900) is an LwM2M client device; and
the destination server is an LwM2M server, such as a LwM2M bootstrap server.

13. The loT device (1900) of claim 11, wherein the processor is further configured with processor-executable instructions to send the uplink traffic including the RDS source port and RDS destination port pair in a NIDD data call that simultaneously routes uplink traffic for up to 16 RDS destination ports.

14. The IoT device (1900) of claim 10, wherein the processor is further configured with processor-executable instructions to determine the App ID for the destination server based on the LwM2M security object associated with the destination server by determining the App ID for the destination server based at least in part on the App ID list in the APN connection profile object.

15. The IoT device (1900) of claim 9, wherein the processor is further configured with processor-executable instructions to:
determine whether an RDS source port and RDS destination port pair to initiate communication with the destination server is indicated in a Lightweight Machine-to-Machine ,LwM2M, security object associated with the destination server; and
send uplink traffic including the RDS source port and RDS destination port pair in a NIDD data call to a Service Capability Exposure Function ,SCEF, for routing to the destination server in response to determining that the RDS source port and RDS destination port pair to initiate communication with the destination server is indicated in the LwM2M security object; and the processor is optionally further configured with processor-executable instructions to:
determine the RDS source port and RDS destination port pair to initiate communication with the destination server based on the determined App ID for the destination server from the LwM2M security object and the APN connection profile object as a reference into the RDS source port list and the RDS destination port list in response to determining that the RDS source port and RDS destination port pair to initiate communication with the destination server are not indicated in the LwM2M security object; and
send the uplink traffic including the RDS source port and RDS destination port pair in a NIDD data call to the SCEF for routing to the destination server.

## Patentansprüche

1. Verfahren (1850) zum Unterstützen mehrerer gleichzeitiger Verbindungen über einen einzigen NIDD-(Non-Internet Protocol (Non-IP) Data Delivery)-Datenanruf durch ein IoT-(Internet of Things)-Gerät, das Folgendes beinhaltet:
Empfangen (1822), durch einen Prozessor des IoT-Geräts, eines APN-(Access Point Name)-Verbindungsprofilobjekts einschließlich einer App-ID-(Application Identifier)-Liste, einer RDS-(Reliable Delivery Service)-Zielportliste und einer RDS-Quellportliste, wobei die App-ID-Liste App-IDs für Zielserver anzeigt, die RDS-Zielportliste RDS-Zielports zur Kommunikation mit den Servern anzeigt und die RDS-Quellportliste RDS-Quellports zur Kommunikation mit den Servern anzeigt;
Feststellen (1852), durch den Prozessor, ob ein LwM2M-(Lightweight Machine-to-Machine)-Sicherheitsobjekt, das eine App-ID (Application Identifier) eines Zielservers anzeigt, ein RDS-Quellport- und RDS-Zielport-Paar zur Kommunikation mit dem Zielserver anzeigt;
Feststellen (1854), durch den Prozessor, ob eine Portabfrage von dem IoT-Gerät unterstützt wird, als Reaktion auf die Feststellung, dass die Anzeige der App-ID des Zielservers durch das LwM2M-Sicherheitsobjekt das RDS-Zielport- und RDS-Quellport-Paar zur Kommunikation mit dem Zielserver nicht anzeigt; und
Senden (1856), durch den Prozessor, einer Abfrage zu einer SCEF (Service Capability Exposure Function) in einem NIDD-Datenanruf, die das RDS-Quellport- und RDS-Zielport-Paar zur Kommunikation mit dem Zielserver als Reaktion auf die Feststellung anfordert, dass eine Portabfrage durch das IoT-Gerät unterstützt wird.

2. Verfahren (1850) nach Anspruch 1, das ferner Folgendes beinhaltet:
Bestimmen (1824), durch den Prozessor, einer App ID für einen Zielserver auf der Basis eines mit dem Zielserver assoziierten LwM2M-(Lightweight Machine-to-Machine)-Sicherheitsobjekts;
Bestimmen (1826), durch den Prozessor, eines RDS-Quellport- und RDS-Zielport-Paars zum Einleiten von Kommunikation mit dem Zielserver auf der Basis der bestimmten App-ID für den Zielserver aus dem LwM2M-Sicherheitsobjekt und dem APN-Verbindungsprofilobjekt; und
Senden (506), durch den Prozessor, von Uplink-Verkehr, der das RDS-Quellport- und RDS-Zielport-Paar enthält, in einem NIDD-Datenanruf zu einer SCEF (Service Capability Exposure Function) zum Routen zum Zielserver.

3. Verfahren (1850) nach Anspruch 1, das ferner Folgendes beinhaltet:
Bestimmen (1826), durch den Prozessor, des RDS-Quellport- und RDS-Zielport-Paars zur Kommunikation mit dem Zielserver auf der Basis der App-ID für den Zielserver und dem APN-Verbindungsprofilobjekt als Reaktion auf die Feststellung, dass Portabfragen durch das IoT-Gerät nicht unterstützt werden; und
Senden (506), durch den Prozessor, von Uplink-Verkehr, der das RDS-Quellport- und RDS-Zielport-Paar enthält, in einem NIDD-Datenaufruf zu der SCEF zum Routen zum Zielserver.

4. Verfahren (1850) nach Anspruch 3, wobei:
das IoT-Gerät ein LwM2M-Client-Gerät ist; und
der Zielserver ein LwM2M-Server wie beispielsweise ein LwM2M-Bootstrap-Server ist.

5. Verfahren (1850) nach Anspruch 3, wobei der NIDD-Datenanruf gleichzeitig Uplink-Verkehr für bis zu 16 RDS-Zielports routet.

6. Verfahren (1850) nach Anspruch 2, wobei das Bestimmen (1824) der App-ID für den Zielserver auf der Basis des mit dem Zielserver assoziierten LwM2M-Sicherheitsobjekts das Bestimmen der App-ID für den Zielserver zumindest teilweise auf der Basis der App-ID-Liste in dem APN-Verbindungsprofilobjekt beinhaltet.

7. Verfahren (1850) nach Anspruch 1, das ferner Folgendes beinhaltet:
Feststellen, durch den Prozessor, ob ein RDS-Quellport- und RDS-Zielport-Paar zum Einleiten von Kommunikation mit dem Zielserver in einem mit dem Zielserver assoziierten LwM2M-(Lightweight Machine-to-Machine)-Sicherheitsobjekt angezeigt ist; und
Senden (506), durch den Prozessor von Uplink-Verkehr, der das RDS-Quellport- und RDS-Zielport-Paar enthält, in einem NIDD-Datenanruf zu einer SCEF (Service Capability Exposure Function) zum Routen zum Zielserver als Reaktion auf die Feststellung, dass das RDS-Quellport- und RDS-Zielport-Paar zum Einleiten von Kommunikation mit dem Zielserver in dem LwM2M-Sicherheitsobjekt angezeigt ist.

8. Verfahren (1850) nach Anspruch 7, das ferner Folgendes beinhaltet:
Bestimmen, durch den Prozessor, des RDS-Quellport- und RDS-Zielport-Paares zum Einleiten von Kommunikation mit dem Zielserver auf der Basis der bestimmten App-ID für den Zielserver aus dem LwM2M-Sicherheitsobjekt und dem APN-Verbindungsprofilobjekt als einen Verweis auf die RDS-Quellport-Liste und die RDS-Zielport-Liste als Reaktion auf die Feststellung, dass das RDS-Quellport- und RDS-Zielport-Paar zum Einleiten von Kommunikation mit dem Zielserver nicht in dem LwM2M-Sicherheitsobjekt angezeigt ist; und
Senden (506), durch den Prozessor, von Uplink-Verkehr, der das RDS-Quellport- und RDS-Zielport-Paar enthält, in einem NIDD-Datenanruf zur SCEF zum Routen zum Zielserver.

9. IoT-(Internet of Things)-Gerät (1900), das Folgendes umfasst:
einen Prozessor (202), der mit prozessorausführbaren Befehlen konfiguriert ist, die bei Ausführung durch den Prozessor den Prozessor veranlassen zum:
Empfangen eines APN-(Access Point Name)-Verbindungsprofilobjekts einschließlich einer App-ID-(Application Identifier)-Liste, einer RDS-(Reliable Delivery Service)-Zielportliste und einer RDS-Quellportliste, wobei die App-ID-Liste App-IDs für Zielserver anzeigt, die RDS-Zielportliste RDS-Zielports zur Kommunikation mit den Servern anzeigt und die RDS-Quellportliste RDS-Quellports zur Kommunikation mit den Servern anzeigt;
Feststellen, ob ein LwM2M-(Lightweight Machineto-Machine)-Sicherheitsobjekt, das eine App-ID (Application Identifier) eines Zielservers anzeigt, ein RDS-Quellport- und RDS-Zielport-Paar zur Kommunikation mit dem Zielserver anzeigt;
Feststellen, ob eine Portabfrage von dem IoT-Gerät (1900) unterstützt wird, als Reaktion auf die Feststellung, dass die Anzeige der App-ID des Zielservers durch das LwM2M-Sicherheitsobjekt das RDS-Zielport- und RDS-Quellport-Paar zur Kommunikation mit dem Zielserver nicht anzeigt; und
Senden einer Abfrage an eine SCEF (Service Capability Exposure Function) in einem NIDD-Datenanruf, die das RDS-Quellport- und RDS-Zielport-Paar zur Kommunikation mit dem Zielserver als Reaktion auf die Feststellung anfordert, dass eine Portabfrage durch das IoT-Gerät (1900) unterstützt wird.

10. IoT-Gerät (1900) nach Anspruch 9, wobei der Prozessor (202) ferner mit prozessorausführbaren Befehlen konfiguriert ist zum:
Bestimmen einer App-ID für einen Zielserver auf der Basis eines mit dem Zielserver assoziierten LwM2M-(Lightweight Machine-to-Machine)-Sicherheitsobjekts;
Bestimmen eines RDS-Quellport- und RDS-Zielport-Paars zum Einleiten von Kommunikation mit dem Zielserver auf der Basis der bestimmten App-ID für den Zielserver aus dem LwM2M-Sicherheitsobjekt und dem APN-Verbindungsprofilobjekt; und
Senden von Uplink-Verkehr, der das RDS-Quellport- und RDS-Zielport-Paar enthält, in einem NIDD-Datenanruf zu einer SCEF (Service Capability Exposure Function) zum Routen zum Zielserver.

11. IoT-Gerät (1900) nach Anspruch 9, wobei der Prozessor (202) ferner mit prozessorausführbaren Befehlen konfiguriert ist zum:
Bestimmen des RDS-Quellport- und RDS-Zielport-Paars zum Kommunizieren mit dem Zielserver auf der Basis der App-ID für den Zielserver und dem APN-Verbindungsprofilobjekt als Reaktion auf die Feststellung, dass Portabfragen durch das IoT-Gerät (1900) nicht unterstützt werden; und
Senden von Uplink-Verkehr, der das RDS-Quellport- und RDS-Zielport-Paar enthält, in einem NIDD-Datenaufruf zu der SCEF zum Routen zum Zielserver.

12. IoT-Gerät (1900) nach Anspruch 11, wobei:
das IoT-Gerät (1900) ein LwM2M-Client-Gerät ist; und
der Zielserver ein LwM2M-Server wie beispielsweise ein LwM2M-Bootstrap-Server ist.

13. IoT-Gerät (1900) nach Anspruch 11, wobei der Prozessor ferner mit prozessorausführbaren Befehlen konfiguriert ist, um den Uplink-Verkehr, der das RDS-Quellport- und RDS-Zielport-Paar enthält, in einem NIDD-Datenaufruf zu senden, der gleichzeitig Uplink-Verkehr für bis zu 16 RDS-Zielports routet.

14. IoT-Gerät (1900) nach Anspruch 10, wobei der Prozessor ferner mit prozessorausführbaren Befehlen zum Bestimmen der App-ID für den Zielserver auf der Basis des mit dem Zielserver assoziierten LwM2M-Sicherheitsobjekts durch Bestimmen der App-ID für den Zielserver zumindest teilweise auf der Basis der App-ID-Liste in dem APN-Verbindungsprofilobjekt konfiguriert ist.

15. IoT-Gerät (1900) nach Anspruch 9, wobei der Prozessor ferner mit prozessorausführbaren Befehlen konfiguriert ist zum:
Feststellen, ob ein RDS-Quellport- und RDS-Zielport-Paar zum Einleiten von Kommunikation mit dem Zielserver in einem mit dem Zielserver assoziierten LwM2M-(Lightweight Machine-to-Machine)-Sicherheitsobjekt angezeigt ist; und
Senden von Uplink-Verkehr, der das RDS-Quellport- und RDS-Zielport-Paar enthält, in einem NIDD-Datenaufruf zu einer SCEF (Service Capability Exposure Function) zum Routen zum Zielserver als Reaktion auf die Feststellung, dass das RDS-Quellport- und RDS-Zielport-Paar zum Einleiten von Kommunikation mit dem Zielserver in dem LwM2M-Sicherheitsobjekt angezeigt ist; und der Prozessor ist optional ferner mit prozessorausführbaren Befehlen konfiguriert zum:
Bestimmen des RDS-Quellport- und RDS-Zielport-Paars zum Einleiten von Kommunikation mit dem Zielserver auf der Basis der bestimmten App-ID für den Zielserver aus dem LwM2M-Sicherheitsobjekt und dem APN-Verbindungsprofilobjekt als einen Verweis auf die RDS-Quellport-Liste und die RDS-Zielport-Liste als Reaktion auf die Feststellung, dass das RDS-Quellport- und RDS-Zielport-Paar zum Einleiten von Kommunikation mit dem Zielserver in dem LwM2M-Sicherheitsobjekt nicht angezeigt sind; und
Senden des Uplink-Verkehrs, der das RDS-Quellport- und RDS-Zielport-Paar enthält, in einem NIDD-Datenaufruf zu der SCEF zum Routen zum Zielserver.

## Revendications

1. Procédé (1850) de prise en charge de multiples connexions simultanées sur un seul dispositif de l'Internet des objets, loT, de distribution de données non de protocole Internet, non-IP, NIDD, comprenant :
la réception (1822), par un processeur du dispositif IoT, d'un objet de profil de connexion de nom de point d'accès, APN, comportant une liste d'identifiants d'applications, App ID, une liste de ports destinataires de service de délivrance fiable, RDS, et une liste de ports sources de RDS, dans lequel la liste d'App ID indique des App ID de serveurs destinataire, la liste de ports destinataires de RDS indique des ports destinataires de RDS pour communiquer avec les serveurs et la liste de ports sources de RDS indique des ports sources de RDS pour communiquer avec les serveurs ;
la détermination (1852), par le processeur, qu'un objet de sécurité de machine à machine léger, LwM2M, indiquant un identifiant d'application, App ID, d'un serveur destinataire indique ou non une paire de port source de RDS et de port destinataire de RDS pour communiquer avec le serveur destinataire ;
la détermination (1854), par le processeur, que le dispositif IoT prend ou charge ou non une interrogation de port en réponse à la détermination que l'objet de sécurité LwM2M indiquant l'App ID du serveur destinataire n'indique pas la paire de port destinataire de RDS et de port source de RDS pour communiquer avec le serveur destinataire ; et
l'envoi (1856), par le processeur, d'une interrogation à une fonction d'exposition de capabilité de service, SCEF, dans un appel de données NIDD demandant la paire de port source de RDS et de port destinataire de RDS pour communiquer avec le serveur destinataire en réponse à la détermination que le dispositif IoT prend en charge une interrogation de port.

2. Procédé (1850) selon la revendication 1, comprenant en outre :
la détermination (1824), par le processeur, d'un App ID d'un serveur destinataire en fonction d'un objet de sécurité de machine à machine léger, LwM2M, associé au serveur destinataire ;
la détermination (1826), par le processeur, d'une paire de port source de RDS et de port destinataire de RDS pour lancer une communication avec le serveur destinataire en fonction de l'App ID déterminé pour le serveur destinataire à partir de l'objet de sécurité LwM2M et de l'objet de profil de connexion APN ; et
l'envoi (506), par le processeur, d'un trafic de liaison montante comportant la paire de port source de RDS et de port destinataire de RDS dans un appel de données NIDD à une fonction d'exposition de capabilité de service, SCEF, pour son routage vers le serveur destinataire.

3. Procédé (1850) selon la revendication 1, comprenant en outre :
la détermination (1826), par le processeur, de la paire de port source de RDS et de port destinataire de RDS pour communiquer avec le serveur destinataire en fonction de l'App ID du serveur destinataire et de l'objet de profil de connexion APN en réponse à la détermination que le dispositif IoT ne prend pas en charge les interrogations de ports ; et
l'envoi (506), par le processeur, d'un trafic de liaison montante comportant la paire de port source de RDS et de port destinataire de RDS dans un appel de données NIDD à une fonction d'exposition de capabilité de service, SCEF, en vue de son routage vers le serveur destinataire.

4. Procédé (1850) selon la revendication 3, dans lequel :
le dispositif IoT est un dispositif client LwM2M ; et
le serveur destinataire est un serveur LwM2M, tel qu'un serveur d'amorçage LwM2M.

5. Procédé (1850) selon la revendication 3, dans lequel l'appel de données NIDD route un trafic de liaison montante pour un maximum de 16 ports destinataires de RDS.

6. Procédé (1850) selon la revendication 2, dans lequel la détermination (1824) de l'App ID du serveur destinataire en fonction de l'objet de sécurité LwM2M associé au serveur destinataire comprend la détermination de l'App ID pour le serveur destinataire en fonction au moins en partie de la liste d'App ID dans l'objet de profil de connexion APN.

7. Procédé (1850) selon la revendication 1, comprenant en outre :
la détermination, par le processeur, qu'une paire de port source de RDS et de port destinataire de RDS pour lancer une communication avec le serveur destinataire est indiquée ou non dans un objet de sécurité de machine à machine léger, LwM2M, associé au serveur destinataire ; et
l'envoi (506), par le processeur, d'un trafic de liaison montante comportant la paire de port source de RDS et de port destinataire de RDS dans un appel de données NIDD à une fonction d'exposition de capabilité de service, SCEF, pour son routage vers le serveur destinataire en réponse à la détermination que la paire de port source de RDS et de port destinataire de RDS pour lancer une communication avec le serveur destinataire est indiquée dans l'objet de sécurité LwM2M.

8. Procédé (1850) selon la revendication 7, comprenant en outre :
la détermination, par le processeur, de la paire de port source de RDS et de port destinataire de RDS pour lancer une communication avec le serveur destinataire en fonction de l'App ID déterminé pour le serveur destinataire à partir de l'objet de sécurité LwM2M et de l'objet de profil de connexion APN comme référence dans la liste de ports sources de RDS et la liste de ports destinataires de RDS en réponse à la détermination que la paire de port source de RDS et de port destinataire de RDS pour lancer une communication avec le serveur destinataire n'est pas indiquée dans l'objet de sécurité LwM2M ; et
l'envoi (506), par le processeur, d'un trafic de liaison montante comportant la paire de port source de RDS et de port destinataire de RDS dans un appel de données NIDD à la SCEF pour son routage vers le serveur destinataire.

9. Dispositif de l'Internet des Objets, loT, (1900), comprenant :
un processeur (202) configuré avec des instructions exécutables par processeur qui, à leur exécution par le processeur, amènent le processeur à :
recevoir un objet de profil de connexion de nom de point d'accès, APN, comportant une liste d'identifiants d'applications, App ID, une liste de ports destinataires de service de délivrance fiable, RDS, et une liste de ports sources de RDS, dans lequel la liste d'App ID indique des App ID de serveurs destinataire, la liste de ports destinataires de RDS indique des ports destinataires de RDS pour communiquer avec les serveurs et la liste de ports sources de RDS indique des ports sources de RDS pour communiquer avec les serveurs ;
déterminer qu'un objet de sécurité de machine à machine léger, LwM2M, indiquant un identifiant d'application, App ID, d'un serveur destinataire indique ou non une paire de port source de RDS et de port destinataire de RDS pour communiquer avec le serveur destinataire ;
déterminer que le dispositif IoT (1900) prend en charge ou non une interrogation de port en réponse à la détermination que l'objet de sécurité LwM2M indiquant l'App ID du serveur destinataire n'indique pas la paire de port destinataire de RDS et de port source de RDS pour communiquer avec le serveur destinataire ; et
envoyer une interrogation à une fonction d'exposition de capabilité de service, SCEF, dans un appel de données NIDD demandant la paire de port source de RDS et de port destinataire de RDS pour communiquer avec le serveur destinataire en réponse à la détermination que le dispositif loT (1900) prend en charge une interrogation de port.

10. Dispositif IoT (1900) selon la revendication 9, dans lequel le processeur (202) est configuré en outre avec des instructions exécutables par processeur pour :
déterminer un App ID d'un serveur destinataire en fonction d'un objet de sécurité de machine à machine léger, LwM2M, associé au serveur destinataire ;
déterminer une paire de port source de RDS et de port destinataire de RDS pour lancer une communication avec le serveur destinataire en fonction de l'App ID déterminé du serveur destinataire à partir de l'objet de sécurité LwM2M et de l'objet de profil de connexion APN ; et
envoyer un trafic de liaison montante comportant la paire de port source de RDS et de port destinataire de RDS dans un appel de données NIDD à une fonction d'exposition de capabilité de service, SCEF, pour son routage vers le serveur destinataire

11. Dispositif IoT (1900) selon la revendication 9, dans lequel le processeur (202) est configuré en outre avec des instructions exécutables par processeur pour :
déterminer la paire de port source de RDS et de port destinataire de RDS pour communiquer avec le serveur destinataire en fonction de l'App ID du serveur destinataire et de l'objet de profil de connexion APN en réponse à la détermination que le dispositif loT (1900) ne prend pas en charge les interrogations de port ; et
envoyer un trafic de liaison montante comportant la paire de port source de RDS et de port destinataire de RDS dans un appel de données NIDD à la SCEF, en vue de son routage vers le serveur destinataire

12. Dispositif IoT (1900) selon la revendication 11, dans lequel :
le dispositif loT (1900) est un dispositif client LwM2M ; et
le serveur destinataire est un serveur LwM2M, tel qu'un serveur d'amorçage LwM2M.

13. Dispositif IoT (1900) selon la revendication 11, dans lequel le processeur est configuré en outre avec des instructions exécutables par processeur pour envoyer le trafic de liaison montante comportant la paire de port source de RDS et de port destinataire de RDS dans un appel de données NIDD qui route simultanément un trafic de liaison montante pour un maximum de 16 ports destinataires de RDS.

14. Dispositif IoT (1900) selon la revendication 10, dans lequel le processeur est configuré en outre avec des instructions exécutables par processeur pour déterminer l'App ID du serveur destinataire en fonction de l'objet de sécurité LwM2M associé au serveur destinataire en déterminant l'App ID du serveur destinataire en fonction au moins en partie de la liste d'App ID dans l'objet de profil de connexion APN.

15. Dispositif IoT (1900) selon la revendication 9, dans lequel le processeur est configuré en outre avec des instructions exécutables par processeur pour :
déterminer qu'une paire de port source de RDS et de port destinataire de RDS pour lancer une communication avec le serveur destinataire est indiquée ou non dans un objet de sécurité de machine à machine léger, LwM2M, associé au serveur destinataire ; et
envoyer un trafic de liaison montante comportant la paire de port source de RDS et de port destinataire de RDS dans un appel de données NIDD à une fonction d'exposition de capabilité de service, SCEF, pour son routage vers le serveur destinataire en réponse à la détermination que la paire de port source de RDS et de port destinataire de RDS pour lancer une communication avec le serveur destinataire est indiquée dans l'objet de sécurité LwM2M ; et le processeur est éventuellement configuré en outre avec des instructions exécutables par processeur pour :
déterminer la paire de port source de RDS et de port destinataire de RDS pour lancer une communication avec le serveur destinataire en fonction de l'App ID déterminé pour le serveur destinataire à partir de l'objet de sécurité LwM2M et de l'objet de profil de connexion APN comme référence dans la liste de ports sources de RDS et la liste de ports destinataires de RDS en réponse à la détermination que la paire de port source de RDS et de port destinataire de RDS pour lancer une communication avec le serveur destinataire n'est pas indiquée dans l'objet de sécurité LwM2M ; et
envoyer le trafic de liaison montante comportant la paire de port source de RDS et de port destinataire de RDS dans un appel de données NIDD à la SCEF pour son routage vers le serveur destinataire.
